(19) Europäisches Patentamt / European Patent Office / Office européen des brevets

(11) **EP 3 572 473 B1**

(12) **EUROPEAN PATENT SPECIFICATION**

(45) Date of publication and mention
of the grant of the patent:
**06.07.2022 Bulletin 2022/27**

(21) Application number: **17893229.9**

(22) Date of filing: **18.12.2017**

(51) International Patent Classification (IPC):
**C09D 151/08** (2006.01)     **B05D 1/36** (2006.01)
**B05D 3/02** (2006.01)       **B05D 7/24** (2006.01)
**C09D 7/40** (2018.01)       **C09D 167/00** (2006.01)

(52) Cooperative Patent Classification (CPC):
(C-Sets available)
**B05D 1/36; B05D 3/02; B05D 7/24; C09D 7/40;
C09D 151/08; C09D 167/07**                     (Cont.)

(86) International application number:
**PCT/JP2017/045381**

(87) International publication number:
**WO 2018/135209 (26.07.2018 Gazette 2018/30)**

(54) **AQUEOUS COATING COMPOSITION AND METHOD FOR FORMING MULTILAYERED COATING FILM**

WÄSSRIGE BESCHICHTUNGSZUSAMMENSETZUNG UND VERFAHREN ZUR FORMUNG EINES MEHRSCHICHTIGEN BESCHICHTUNGSFILMS

COMPOSITION DE REVÊTEMENT AQUEUSE ET PROCÉDÉ DE FORMATION DE FILM DE REVÊTEMENT MULTICOUCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.01.2017 JP 2017005520**

(43) Date of publication of application:
**27.11.2019 Bulletin 2019/48**

(73) Proprietor: **Kansai Paint Co., Ltd
Amagasaki-shi, Hyogo 661-8555 (JP)**

(72) Inventor: **IMAI, Takahiro
Hiratsuka-shi
Kanagawa 254-8562 (JP)**

(74) Representative: **Gill Jennings & Every LLP
The Broadgate Tower
20 Primrose Street
London EC2A 2ES (GB)**

(56) References cited:
EP-A1- 1 877 497       EP-A2- 0 032 554
WO-A1-01/90265         WO-A1-2007/126107
JP-A- H05 301 933      JP-A- 2004 043 524
US-A1- 2008 070 040

(52) Cooperative Patent Classification (CPC): (Cont.)

C-Sets
**C09D 167/07, C08L 33/06, C08L 63/00, C08L 75/04**

**Description**

FIELD

The present invention relates to an aqueous coating composition and a multilayer coating film-forming method, by which it is possible to obtain a coating film without impaired finished appearance and with excellent chipping resistance.

BACKGROUND

Methods of forming coating films for automobile bodies include a widely employed method of forming a multilayer coating film by a 3-coat, 2-bake (3C2B) system in which an electrodeposition coating is formed on an article to be coated, after which the procedure of intercoat material application → bake curing → base coating material application → preheating → clear coating material application → bake curing is carried out, but from the viewpoint of achieving energy savings, in recent years, it has also been attempted to employ 3-coat, 1-bake (3C1B) systems that eliminate the bake curing step following application of the intercoat material, wherein electrodeposition coating is carried out on an article to be coated, and then the procedure of intercoat material application → preheating → base coating material application → preheating → clear coating material application → bake curing is carried out.

From the viewpoint of minimizing environmental pollution by volatilization of organic solvents, there is particular demand for 3-coat, 1-bake systems that employ aqueous coating materials as the intercoat material and base coating material.

However, with 3-coat, 1-bake systems employing an aqueous intercoat material and aqueous base coating material, since the aqueous intercoat material and the aqueous base coating material are both used with water as the main solvent, the intercoating film dissolves in the water present in the aqueous base coating material after the aqueous base coating material has been applied onto the intercoating film, producing layer mixing between the intercoating film and base coating film and causing reduced smoothness and sharpness of the obtained coating film. In addition, since the aqueous intercoat material and aqueous base coating material usually employ water-soluble or water-dispersible film-forming resins, the water resistance and chipping resistance of the obtained coating films have sometimes been impaired.

In order to deal with this problem, PTL 1 describes a 3C1B system using an aqueous first colored coating material (A), an aqueous second colored coating material (B) and a clear coating material (C), it being stated that when the aqueous first colored coating material (A) includes a polyester resin (X) and a curing agent (Y), the polyester resin (X) being a polyester resin comprising a benzene ring and a cyclohexane ring in the molecule such that their total content is in the range of 1.0 to 2.2 mol/kg (solid resin content) and the curing agent (Y) being at least one compound selected from the group consisting of isocyanate group-containing compounds (a), oxazoline group-containing compounds (b), carbodiimide group-containing compounds (c), hydrazide group-containing compounds (d) and semicarbazide group-containing compounds (e), it is possible to obtain a multilayer coating film having excellent smoothness, sharpness, chipping resistance and water resistance. However, the smoothness, sharpness, water resistance and chipping resistance have sometimes been insufficient even with multilayer coating films obtained by this coating method.

PTL 2 discloses an aqueous intercoat material composition comprising a resin component and a curing agent, characterized in that the resin component is a graft polymer having a polyester resin as the stem polymer and an acrylic resin as the branch polymer. However, multilayer coating films having intercoating films formed by the aqueous intercoat material composition of PTL 2 have been problematic due to an inadequate level of finished appearance and poor circulation stability in coating line pipings.

PTL 3 discloses an aqueous curable resin composition comprising a (meth)acrylicmodified polyester resin, (meth)acrylic resin particles having a mean particle diameter of 0.1 to 2 $\mu$m, a melamine resin, and water. However, multilayer coating films having intercoating films formed by the aqueous curable resin composition of PTL 2 have also been problematic due to insufficient chipping resistance and adhesion, and an inadequate level of finished appearance resulting from the presence of the (meth)acrylic resin particles.

PTL 4 discloses a coating composition comprising (a) a diluent medium; (b) a film-forming-layer; and (c) at least one passivated metal pigment comprising at least one metal pigment particle and a passivating material formed over at least one pigment particle, the passivating material comprising a polymer comprising (a) at least one nitro group, and/or pyridine group, and/or phenolic hydroxyl group; and (b) at least one group selected from a phosphorous-containing group and/or a carboxylic acid group, wherein the at least one phosphorous-containing group is selected from a phosphate, a phosphite, or a non-nitrogen substituted phosphonate. However, PTL 4 does not disclose the modification of polyester binder polymers with acrylic resins which have monomers of a molecular weight above 400.

[CITATION LIST]

[PATENT LITERATURE]

[PTL 1] WO2007/126107
[PTL 2] Japanese Unexamined Patent Publication No. 2004-043524
[PTL 3] Japanese Unexamined Patent Publication No. 2008-144063
[PTL 4] European Patent Publication No. EP 1877497

SUMMARY

[TECHNICAL PROBLEM]

It is an object of the present invention to provide an aqueous coating composition with excellent finished appearance and storage stability, excellent chipping resistance due to a satisfactory coating property, and excellent coating manageability.

[SOLUTION TO PROBLEM]

As a result of ardent research aimed at achieving the object stated above, the present inventors have completed this invention upon finding that the aforementioned object can be achieved by an aqueous coating composition containing an acryl-modified polyester resin having an acrylic portion with a polyoxyalkylene chain and a polyester portion wherein the proportion of components that are compounds of 6 or more carbon atoms is 50 mass% or greater with respect to the total amount of the components composing the polyester portion, a crosslinking agent, and an epoxy phosphoric acid ester compound.

Specifically, according to claim 1 the present invention relates to an aqueous coating composition comprising (A) an acryl-modified polyester resin having an acrylic portion and a polyester portion, (B) a crosslinking agent, and (C) an epoxy phosphoric acid ester compound, wherein the acryl-modified polyester resin (A) comprises 1 to 5 mass % polyoxyalkylene group-containing unsaturated monomer with a weight-average molecular weight of 400 or greater as a monomer component composing the acrylic portion, the proportion of compounds of 6 or more carbon atoms among the components composing the polyester portion is 50 mass% or greater with respect to the total amount of the components composing the polyester portion, and the content of the epoxy phosphoric acid ester compound (C) is 0.1 to 10 parts by mass with respect to 100 parts by mass as the total solid content of (A) and (B), as well as a multilayer coating film-forming method using the composition.

[ADVANTAGEOUS EFFECTS OF INVENTION]

The aqueous coating composition of the invention contains an acryl-modified polyester resin having an acrylic portion with a polyoxyalkylene chain and a polyester portion wherein the proportion of components that are compounds of 6 or more carbon atoms is 50 mass% or greater of the total amount of the constituent components of the polyester, and an epoxy phosphoric acid ester.

Since the acryl-modified polyester resin has a polyoxyalkylene chain with an acrylic portion in a specified amount, it has excellent dispersion stability in aqueous resin systems, and since the bulk effect provided by the polyoxyalkylene chains also contributes to the viscosity of the formed coating film, an effect of reducing layer mixing of the uncured multilayer coating film is exhibited. Furthermore, since at least a fixed amount of the polyester portion is composed of a compound starting material having 6 or more carbon atoms, that contributes to formation of a relatively soft structure, the physical properties are also excellent. By having the structure thus controlled in a functional manner, it can efficiently exhibit features based on the different compositions of the acrylic portion and the polyester portion, when it is used as a constituent component for a coating composition.

In addition, since the epoxy phosphoric acid ester contributes to accelerated curing and improved adhesion at the interface between the upper layer coating film or lower layer coating film, it is possible to obtain a multilayer coating film with excellent chipping resistance and waterproof adhesiveness, without causing the finished appearance to be impaired.

According to the invention, therefore, an effect is exhibited whereby it is possible to form a coating film with excellent finished appearance and storage stability and with excellent chipping resistance and waterproof adhesiveness, since the coating property is satisfactory, and also to obtain an aqueous coating composition that has excellent coating manageability.

DESCRIPTION OF EMBODIMENTS

The aqueous coating composition of the invention contains an acryl-modified polyester resin (A) having an acrylic portion and a polyester portion, a crosslinking agent (B), and an epoxy phosphoric acid ester compound (C).

Acryl-modified polyester resin (A)

The acryl-modified polyester resin (A) contains a polyoxyalkylene group-containing unsaturated monomer with a weight-average molecular weight of 400 or greater as a monomer component composing the acrylic portion, wherein the proportion of the compound with 6 or more carbon atoms among the components of the polyester portion is 50 mass% or greater with respect to the total amount of the components composing the polyester portion.

The method for producing the acryl-modified polyester resin (A) is not particularly restricted, and it may be synthesized by a common method. Specifically, it may be a method of polymerizing a mixture of an unsaturated group-containing polyester resin and an unsaturated monomer, or a method based on esterification reaction between a polyester resin and an acrylic resin.

A method of obtaining the acryl-modified polyester resin (A) by polymerizing a mixture of an unsaturated group-containing polyester resin and an unsaturated monomer is, specifically, a method of polymerizing the unsaturated monomer using the unsaturated groups in the polyester resin as graft points, for acrylic modification of the polyester resin. The method for obtaining the unsaturated group-containing polyester resin is not particularly restricted, and for example, it can be synthesized by synthesizing a polyester resin by a common method, and reacting the hydroxyl groups of the polyester resin with an acid anhydride group-containing unsaturated monomer to form graft points in the polyester resin, or alternatively, by esterification reaction or transesterification reaction between an alcohol component and an acid component that includes a polybasic acid with an unsaturated group. From the viewpoint of convenience of synthesis, it is preferred for the synthesis to be by a method of esterification reaction or transesterification reaction of an alcohol component and an acid component that includes a polybasic acid with an unsaturated group. Most preferred, from the viewpoint of storage stability, is to use an acid component that includes an acid anhydride group-containing unsaturated monomer, as the polybasic acid with an unsaturated group.

An acid anhydride group-containing unsaturated monomer is a compound having one acid anhydride group and one unsaturated group in the molecule. Specifically, compounds with less than 6 carbon atoms include maleic anhydride, itaconic anhydride, fumaric anhydride, citraconic anhydride, mesaconic anhydride, 2-pentenedioic anhydride, methylenesuccinic anhydride and acetylenedicarboxylic anhydride, and compounds with 6 or more carbon atoms include unsaturated dicarboxylic anhydrides such as tetrahydrophthalic anhydride, allylmalonic anhydride, isopropylidenesuccinic anhydride, 2,4-hexadienedioic anhydride and 4-cyclohexene-1,2-dicarboxylic anhydride. Maleic anhydride is preferred among these from the viewpoint of reactivity, cost and availability.

Examples of acid components other than acid anhydride group-containing unsaturated monomers include aliphatic polybasic acids, alicyclic polybasic acids and aromatic polybasic acids.

The aliphatic polybasic acid will generally be an aliphatic compound having two or more carboxyl groups in the molecule, an acid anhydride of such an aliphatic compound, or an ester of such an aliphatic compound. Examples for the aliphatic polybasic acid include aliphatic polycarboxylic acids, which include, as compounds with less than 6 carbon atoms, succinic acid and glutaric acid, and as compounds with 6 or more carbon atoms, adipic acid, pimelic acid, suberic acid, azelaic acid, sebacic acid, undecanedioic acid, dodecanedioic acid, brassylic acid, octadecanedioic acid, citric acid and butanetetracarboxylic acid; anhydrides of such aliphatic polycarboxylic acids; and esterified products of such aliphatic polycarboxylic acids with lower alkyl compounds having about 1 to 4 carbon atoms. The aliphatic polybasic acid used may be one type or a combination of two or more types.

The aliphatic polybasic acid used is most preferably adipic acid and/or adipic anhydride, from the viewpoint of smoothness of the coating film that is to be obtained.

The alicyclic polybasic acid will generally be a compound having one or more alicyclic structures and two or more carboxyl groups in the molecule, or an acid anhydride of such a compound or an ester of such a compound. An alicyclic structure is mainly a 4- to 6-membered cyclic structure. Examples of alicyclic polybasic acids include alicyclic polycarboxylic acids including, as compounds of 6 or more carbon atoms, 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid and 1,3,5-cyclohexanetricarboxylic acid; anhydrides of these alicyclic polycarboxylic acids; and esterified products of these alicyclic polycarboxylic acids with lower alkyl groups of about 1 to 4 carbon atoms. The alicyclic polybasic acid used may be one type or a combination of two or more types.

From the viewpoint of smoothness of the coating film that is to be obtained, the alicyclic polybasic acid used is preferably 1,2-cyclohexanedicarboxylic acid, 1,2-cyclohexanedicarboxylic anhydride, 1,3-cyclohexanedicarboxylic acid, 1,4-cyclohexanedicarboxylic acid or 4-cyclohexene-1,2-dicarboxylic acid, among which 1,2-cyclohexanedicarboxylic acid and/or 1,2-cyclohexanedicarboxylic anhydride are more preferably used.

The aforementioned aromatic polybasic acids are generally aromatic compounds with two or more carboxyl groups in the molecule, and esters of such aromatic compounds, examples of which include, as compounds of 6 or more carbon atoms, aromatic polycarboxylic acids such as phthalic acid, isophthalic acid, terephthalic acid, naphthalenedicarboxylic acid, 4,4'-biphenyldicarboxylic acid, trimellitic acid and pyromellitic acid; and esterified products of these aromatic polycarboxylic acids with lower alkyl groups of about 1 to 4 carbon atoms. The aromatic polybasic acid used may be one type or a combination of two or more types.

The aromatic polybasic acid used is preferably phthalic acid, isophthalic acid or trimellitic acid.

Acid components other than the aforementioned aliphatic polybasic acids, alicyclic polybasic acids and aromatic polybasic acids may also be used. Such acid components are not particularly restricted, and examples include, as compounds of 6 or more carbon atoms, fatty acids such as coconut fatty acid, cottonseed oil fatty acid, hempseed oil fatty acid, rice bran oil fatty acid, fish oil fatty acid, tall oil fatty acid, soybean oil fatty acid, linseed oil fatty acid, China wood oil fatty acid, rapeseed oil fatty acid, castor oil fatty acid, dehydrated castor oil fatty acid and safflower oil fatty acid; monocarboxylic acids such as lauric acid, myristic acid, palmitic acid, stearic acid, oleic acid, linolic acid, linolenic acid, benzoic acid, p-tert-butylbenzoic acid, cyclohexanoic acid and 10-phenyloctadecanoic acid; and hydroxycarboxylic acids such as lactic acid, 3-hydroxybutanoic acid and 3-hydroxy-4-ethoxybenzoic acid. These acid components may be used alone or in combinations of two or more.

As the alcohol component there may be used polyhydric alcohols having two or more hydroxyl groups in the molecule. Examples of polyhydric alcohols include dihydric alcohols, including, as compounds of less than 6 carbon atoms, ethylene glycol, propylene glycol, diethylene glycol, trimethylene glycol, 1,4-butanediol, 1,3-butanediol, 2,3-butanediol, 1,2-butanediol, 2-methyl-1,3-propanediol, 3-methyl-1,2-butanediol, 1,2-pentanediol, 1,5-pentanediol, 1,4-pentanediol, 2,4-pentanediol, 2,3-dimethyltrimethylene glycol, neopentyl glycol, dimethylolpropionic acid, glycerin, trimethylolethane and pentaerythritol, and as compounds of 6 or more carbon atoms, tetraethylene glycol, dipropylene glycol, 2-butyl-2-ethyl-1,3-propanediol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, 1,4-cyclohexanedimethanol, tricyclodecanedimethanol, hydroxypivalic acid neopentyl glycol ester, hydrogenated bisphenol A and hydrogenated bisphenol F; polylactone diols with lactone compounds such as $\varepsilon$-caprolactone added to these dihydric alcohols; ester diol compounds such as bis(hydroxyethyl)terephthalate; polyether diol compounds such as bisphenol A alkylene oxide addition products, polyethylene glycol, polypropylene glycol and polybutylene glycol; trihydric and greater alcohols such as trimethylolpropane, diglycerin, triglycerin, 1,2,6-hexanetriol, dipentaerythritol, tris(2-hydroxyethyl)isocyanuric acid, sorbitol and mannitol; polylactone polyol compounds with lactone compounds such as $\varepsilon$-caprolactone added to these trihydric and greater alcohols; and fatty acid esterified glycerin.

Alcohol components other than the aforementioned polyhydric alcohols may also be used. Such alcohol components are not particularly restricted, and examples include monoalcohols including, as compounds of less than 6 carbon atoms, methanol, ethanol, propyl alcohol and butyl alcohol, and as compounds of 6 or more carbon atoms, stearyl alcohol and 2-phenoxyethanol; and alcohol compounds obtained by reacting acids with monoepoxy compounds such as propylene oxide, butylene oxide, "CARDURA E10" (trade name of HEXION Specialty Chemicals and glycidyl ester of synthetic highly-branched saturated fatty acid).

Another method for obtaining the unsaturated group-containing polyester resin is a method of using unsaturated fatty acids such as oleic acid and myristic acid (both compounds of 6 or more carbon atoms) as a part of the acid component. In this method, the unsaturated groups of the unsaturated fatty acid are used as graft points.

From the viewpoint of chipping resistance and finished appearance of the obtained coating film, the proportion of compounds of 6 or more carbon atoms among the components composing the polyester portion in the acryl-modified polyester resin (A) is 50 mass% or greater, preferably 70 mass% or greater and more preferably 80 mass% or greater, with respect to the total amount of the components composing the polyester portion.

Among such compounds of 6 or more carbon atoms it is particularly preferred to use compounds having alkylene groups of 4 or more carbon atoms, and especially compounds having alkylene groups of 6 or more carbon atoms.

Such compounds include, for the acid component, adipic acid, azelaic acid, sebacic acid, nonanedioic acid and dodecanedioic acid, and for the alcohol component, 1,6-hexanediol, 1,7-heptanediol, 1,9-nonanediol and 2-butyl-2-ethyl-1,3-propanediol.

The method for producing the unsaturated group-containing polyester resin is not particularly restricted and may be carried out by a common procedure. For example, an unsaturated group-containing polyester resin can be produced by heating the acid component and the alcohol component under a nitrogen stream at 150 to 250°C for 5 to 10 hours, for esterification reaction or transesterification reaction between the acid component and alcohol component.

When the acid component and alcohol component are to be reacted by esterification reaction or transesterification reaction, they may be added all at once to the reactor, or one or both may be added in separate portions or continuously. Alternatively, the unsaturated group-containing polyester resin may be synthesized first, and then the obtained unsaturated group-containing polyester resin may be half-esterified to obtain a polyester resin containing an unsaturated group, a carboxyl group and a hydroxyl group. Also alternatively, the polyester resin containing an unsaturated group and a carboxyl group may be synthesized first, and then the alcohol component may be added to obtain a polyester resin containing an unsaturated group, a carboxyl group and a hydroxyl group.

During the esterification or transesterification reaction, a publicly known catalyst such as dibutyltin oxide, antimony trioxide, zinc acetate, manganese acetate, cobalt acetate, calcium acetate, lead acetate, tetrabutyl titanate or tetraisopropyl titanate may be used as a catalyst for acceleration of the reaction.

The unsaturated group-containing polyester resin may also be modified with a fatty acid, fat or oil, monoepoxy compound, polyisocyanate compound or the like, either during or after preparation of the resin.

Examples for the fatty acid include coconut fatty acid, cottonseed oil fatty acid, hempseed oil fatty acid, rice bran oil fatty acid, fish oil fatty acid, tall oil fatty acid, soybean oil fatty acid, linseed oil fatty acid, China wood oil fatty acid, rapeseed oil fatty acid, castor oil fatty acid, dehydrated castor oil fatty acid and safflower oil fatty acid. The fat or oil may be any fatty acid oil of the aforementioned fatty acids. An example of a suitably monoepoxy compound to be used is "CARDURA E10" (trade name of HEXION Specialty Chemicals, glycidyl ester of synthetic highly-branched saturated fatty acid).

Examples for the polyisocyanate compound include organic polyisocyanates, such as aliphatic diisocyanate compounds such as lysine diisocyanate, hexamethylene diisocyanate and trimethylhexane diisocyanate; alicyclic diisocyanate compounds such as hydrogenated xylylene diisocyanate, isophorone diisocyanate, methylcyclohexane-2,4-diisocyanate, methylcyclohexane-2,6-diisocyanate, 4,4'-methylenebis(cyclohexyl isocyanate) and 1,3-(isocyanatomethyl)cyclohexane; aromatic diisocyanate compounds such as tolylene diisocyanate, xylylene diisocyanate and diphenylmethane diisocyanate; and trivalent and greater polyisocyanates such as lysine triisocyanate; as well as addition products of these organic polyisocyanates with polyhydric alcohols, low molecular weight polyester resins, water or the like; cyclized polymers formed between these organic polyisocyanates (for example, isocyanurates) and biuret-type addition products. These polyisocyanate compounds may be used alone or in combinations of two or more.

The acryl-modified polyester resin (A) comprises a polyoxyalkylene group-containing unsaturated monomer having a weight-average molecular weight of 400 or greater, preferably 800 or greater and more preferably 1000 or greater, as a monomer component composing the acrylic portion.

The unsaturated monomer to be mixed and polymerized with the unsaturated group-containing polyester resin obtained as mentioned above, may be a polyoxyalkylene group-containing unsaturated monomer, or another unsaturated monomer. These unsaturated monomers may be used alone or in combinations of two or more.

The polyoxyalkylene group-containing monomer is an unsaturated monomer having both an unsaturated group and a polyoxyalkylene group, and unsaturated monomers represented by the following formula (I):

$$CH_2=CR^1COO(AO)_PR^2 \qquad (I)$$

are suitable for use. Preferred monomers are those having a structural unit that is an oxyethylene unit, oxypropylene unit or oxytetramethylene unit, as an oxyalkylene unit. [In the formula, AO represents an oxyalkylene unit of 2 to 4 carbon atoms. The p number of oxyalkylene units may be the same or different. When the oxyalkylene units are different, their arrangement may be by block addition, random addition or alternating addition. $R^1$ is a hydrogen atom or methyl group, p is an integer of 1 to 50, $R^2$ is a hydrogen atom, an alkyl group of 1 to 20 carbon atoms or a phenyl group optionally substituted with an alkyl group of 1 to 9 carbon atoms.]

Specific examples of polyoxyalkylene group-containing monomers include methoxypolyethylene glycol mono(meth)acrylate, polyethylene glycol mono(meth)acrylate, methoxypolypropylene glycol mono(meth)acrylate, polypropylene glycol mono(meth)acrylate, ethylene glycol·propylene glycol (meth)acrylate, poly(ethylene glycol·propylene glycol) mono(meth)acrylate, octoxypolyethylene glycol·polypropylene glycol mono(meth)acrylate, octoxypoly(ethylene glycol·propylene glycol)mono(meth)acrylate, stearoxypolyethylene glycol·polypropylene glycol mono(meth)acrylate, stearoxypoly(ethylene glycol·propylene glycol) mono(meth)acrylate, nonylphenoxypolyethylene glycol·polypropylene glycol mono(meth)acrylate, nonylphenoxypoly(ethylene glycol·propylene glycol)mono(meth)acrylate, propylene glycol·tetramethyleneglycol mono(meth)acrylate, poly(propylene glycol·tetramethylene glycol)mono(meth)acrylate, propylene glycol·polybutylene glycol mono(meth)acrylate and poly(propylene glycol·butylene glycol) mono(meth)acrylate. These may be used alone or in combinations of two or more.

For the coating composition of the invention, the polyoxyalkylene group-containing unsaturated monomer used is one having a weight-average molecular weight of 400 or greater, preferably 800 or greater and more preferably 1000 or greater.

By using a polyoxyalkylene group-containing unsaturated monomer as a monomer component composing the acrylic portion of the acryl-modified polyester resin (A), it is possible to obtain an aqueous coating composition with excellent storage stability and finished appearance of the obtained coating film, as well as excellent coating manageability.

The content of the polyoxyalkylene group-containing monomer in the acrylic portion of the acryl-modified polyester resin (A) is also in the range of 1 to 5 mass%, especially 1.5 to 5 mass% and most especially 2 to 5 mass% with respect to the acryl-modified polyester resin (A).

Other unsaturated monomers to be used include the following monomers (i) to (xix), for example.

(i) Alkyl or cycloalkyl (meth)acrylates: For example, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, t-butylcyclohexyl (meth)acrylate, cyclododecyl (meth)acrylate, tricyclodecanyl (meth)acrylate and the like.

(ii) Unsaturated monomers with isobornyl groups: Isobornyl (meth)acrylate and the like.

(iii) Unsaturated monomers with adamantyl groups: Adamantyl (meth)acrylate and the like.

(iv) (iv) Unsaturated monomers with tricyclodecenyl groups: Tricyclodecenyl (meth)acrylate and the like.

(v) Aromatic ring-containing unsaturated monomers: Benzyl (meth)acrylate, styrene, α-methylstyrene, vinyltoluene and the like.

(vi) Unsaturated monomers with alkoxysilyl groups: Vinyltrimethoxysilane, vinyltriethoxysilane, vinyltris(2-methoxyethoxy)silane, γ-(meth)acryloyloxypropyltrimethoxysilane, γ-(meth)acryloyloxypropyltriethoxysilane and the like.

(vii) Unsaturated monomers with fluorinated alkyl groups: Perfluoroalkyl (meth)acrylates such as perfluorobutylethyl (meth)acrylate and perfluorooctylethyl (meth)acrylate, and fluoroolefins and the like.

(viii) Unsaturated monomers with photopolymerizable functional groups such as maleimide.

(ix) Vinyl compounds: N-Vinylpyrrolidone, ethylene, butadiene, chloroprene, vinyl propionate, vinyl acetate and the like.

(x) Carboxyl group-containing unsaturated monomers: (meth)acrylic acid, maleic acid, crotonic acid, β-carboxyethyl acrylate and the like.

(xi) Hydroxyl group-containing unsaturated monomers: monoesterified products of (meth)acrylic acid and dihydric alcohols of 2 to 8 carbon atoms, such as 2-hydroxyethyl (meth)acrylate, 2-hydroxypropyl (meth)acrylate, 3-hydroxypropyl (meth)acrylate and 4-hydroxybutyl (meth)acrylate; ε-caprolactone-modified forms of the monoesterified products of (meth)acrylic acid and dihydric alcohols of 2 to 8 carbon atoms; N-hydroxymethyl (meth)acrylamide; allyl alcohols.

(xii) Nitrogen-containing unsaturated monomers: (Meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylenebis(meth)acrylamide, ethylenebis(meth)acrylamide, and glycidyl (meth)acrylate and amine compound addition products and the like.

(xviii) Unsaturated monomers with two or more unsaturated groups in the molecule: Allyl (meth)acrylate, 1,6-hexanediol di(meth)acrylate and the like.

(xiv) Epoxy group-containing unsaturated monomers: Glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, allyl glycidyl ether and the like.

(xv) Unsaturated monomers with sulfonic acid groups: 2-Acrylamide-2-methylpropanesulfonic acid, 2-sulfoethyl (meth)acrylate, allylsulfonic acid, 4-styrenesulfonic acid and the like; and sodium salts and ammonium salts of these sulfonic acids, and the like.

(xvi) Unsaturated monomers with phosphate groups: Acid phosphooxyethyl (meth)acrylate, acid phosphooxypropyl (meth)acrylate, acid phosphooxypoly(oxyethylene)glycol (meth)acrylate, acid phosphooxypoly(oxypropylene)glycol (meth)acrylate, and the like.

(xvii) Unsaturated monomers with ultraviolet absorbing functional groups: 2-Hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone, 2-(2'-hydroxy-5'-methacryloyloxyethylphenyl)-2H-benzotriazole, and the like.

(xiii) Ultraviolet-stable unsaturated monomers: 4-(Meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, 1-crotonoyl-4-crotonoyloxy-2,2,6,6-tetramethylpiperidine, and the like.

(xix) Unsaturated monomers with carbonyl groups: Acrolein, diacetoneacrylamide, diacetonemethacrylamide, acetoacetoxyethyl methacrylate, formylstyrol, vinylalkyl ketones with 4 to 7 carbon atoms (for example, vinylmethyl ketone, vinylethyl ketone, vinylbutyl ketone), and the like.

As used herein, "unsaturated group" means an unsaturated group that can participate in radical polymerization. Examples of such unsaturated groups include vinyl and (meth)acryloyl.

Also, as used herein, "(meth)acrylate" refers to acrylate or methacrylate. The term "(meth)acrylic acid" refers to acrylic acid or methacrylic acid.

The term "(meth)acryloyl" refers to acryloyl or methacryloyl. The term "(meth)acrylamide" refers to acrylamide or methacrylamide.

For other unsaturated monomers it is preferred to use, as at least a portion thereof, (x) a carboxyl group-containing unsaturated monomer and (v) an aromatic ring-containing unsaturated monomer, from the viewpoint of graft reactivity with the polyester resin and water-dispersibility of the obtained acrylic acid-modified polyester resin (A).

When using (x) a carboxyl group-containing unsaturated monomer and (v) an aromatic ring-containing unsaturated monomer, the proportions in which they are used are preferably such that:

the (x) carboxyl group-containing unsaturated monomer is in the range of 1 to 40 mass%, especially 5 to 40 mass% and most especially 10 to 40 mass%, and

the (v) aromatic ring-containing unsaturated monomer is in the range of 1 to 30 mass%, especially 5 to 30 mass% and most especially 10 to 30 mass%,

with respect to the total amount of the unsaturated monomers (the total amount of the acrylic constituent component).

The acryl-modified polyester resin (A) can be synthesized by copolymerization of the unsaturated group-containing polyester resin and the unsaturated monomer by a publicly known method.

As a specific example, it may be synthesized by adding the unsaturated group-containing polyester resin, unsaturated monomer and radical initiator, and a chain transfer agent if necessary, into a reactor and heating them at 90 to 160°C for 1 to 5 hours. From the viewpoint of controlling the reaction temperature, the unsaturated group-containing polyester resin may be charged into the reactor first, and the other starting materials added over periods of time.

The polymerization initiator used may be an organic peroxide-based compound, azo-based compound or the like. Examples of organic peroxide-based polymerization initiators include benzoyl peroxide, t-butylperoxy-2-ethyl hexanoate, di-t-butyl peroxide, t-butyl peroxybenzoate and t-amylperoxy-2-ethylhexanoate, and examples of azo-based polymerization initiators include azobisisobutyronitrile and azobisdimethylvaleronitrile. The chain transfer agent may be an $\alpha$-methylstyrene dimer, mercaptane or the like.

The method for obtaining the acryl-modified polyester resin (A) by esterification reaction between a polyester resin and an acrylic resin, on the other hand, is a method in which a portion of the polyester resin is grafted with the acrylic resin by transesterification reaction.

From the viewpoint of coating properties, the ratio of the acrylic portion and the polyester portion of the acryl-modified polyester resin (A) is such that the acrylic portion is in the range of 5 to 40 mass%, especially 5 to 30 mass% and most especially 5 to 25 mass% and the polyester portion is in the range of 60 to 95 mass%, especially 70 to 95 mass% and most especially 75 to 95 mass%, with respect to the acryl-modified polyester resin (A) (the total of the acrylic portion and polyester portion).

From the viewpoint of curability and water resistance, the acryl-modified polyester resin (A) has a hydroxyl value of preferably in the range of 20 to 200 mgKOH/g, especially 30 to 150 mgKOH/g and most especially 30 to 100 mgKOH/g.

The hydroxyl value of the acrylic portion is preferably in the range of 0 to 70 mgKOH/g, especially 0 to 50 mgKOH/g and most especially 0 to 30 mgKOH/g.

The hydroxyl value of the polyester portion is preferably in the range of 20 to 200 mgKOH/g, especially 30 to 150 mgKOH/g and most especially 30 to 120 mgKOH/g.

From the viewpoint of water-dispersibility, the acryl-modified polyester resin (A) has an acid value preferably in the range of 10 to 100 mgKOH/g, especially 15 to 80 mgKOH/g and most especially 15 to 60 mgKOH/g.

The acid value of the acrylic portion is preferably in the range of 50 to 500 mgKOH/g, especially 80 to 400 mgKOH/g and most especially 100 to 300 mgKOH/g.

The acid value of the polyester portion is preferably in the range of 0 to 20 mgKOH/g, especially 0 to 15 mgKOH/g and most especially 0 to 10 mgKOH/g.

The number-average molecular weight of the acryl-modified polyester resin (A) is preferably in the range of 1000 to 10,000, especially 2000 to 10,000 and most especially 3000 to 10,000, from the viewpoint of coating film outer appearance, coating properties and chipping resistance.

As used herein, the average molecular weight is the value determined by converting the retention time (retention volume) using gel permeation chromatography (GPC) to polystyrene molecular weight based on the retention time (retention volume) for standard polystyrene of known molecular weight, measured under the same conditions. Specifically, it may be measured using "HLC-8120GPC" (trade name of Tosoh Corp.) as the gel permeation chromatograph, using 4 columns, a "TSKgel G4000HXL", "TSKgel G3000HXL", "TSKgel G2500HXL" and "TSKgel G2000HXL" (all trade names of Tosoh Corp.) as the columns, and using a differential refractometer as the detector, under the conditions of mobile phase: tetrahydrofuran, measuring temperature: 40°C, flow rate: 1 mL/min.

The acryl-modified polyester resin (A) may be neutralized and dispersed in water to be prepared as an aqueous dispersion. Amine compounds and ammonia may be used as neutralizing agents. Examples of amine compounds include triethylamine, triethanolamine, dimethylethanolamine, diethylethanolamine and morpholine. Particularly preferred among these are triethylamine and dimethylethanolamine. The degree of neutralization is not particularly restricted, but it is preferably in the range of usually 0.3 to 1.0 equivalents with respect to the acid groups in the resin.

The aqueous medium in the aqueous dispersion of the acryl-modified polyester resin (A) may be water alone, or it may be a mixture of water and an organic solvent.

Preferred organic solvents include alcohol-based solvents and ether-based solvents. Specific examples include alcohol-based solvents such as n-butanol; and ether-based solvents such as ethyleneglycol monobutyl ether, ethyleneglycol monoisopropyl ether, ethyleneglycol monomethyl ether, propyleneglycol monomethyl ether and diethyleneglycol monoethyl ether. It is also possible to use esteric solvents such as ethyl acetate and butyl acetate, ketone-based solvents such as methyl ethyl ketone and cyclohexanone, and aromatic hydrocarbon-based solvents such as toluene and xylene.

Neutralization and dispersion of the acryl-modified polyester resin in an aqueous medium may be carried out by a common method, such as a method of gradually adding the acryl-modified polyester resin to the neutralizing agent-containing aqueous medium while stirring, a method of neutralizing the acryl-modified polyester resin with the neutralizing agent, and then adding the aqueous medium while stirring, or a method of adding the neutralized product into the aqueous medium.

The aqueous coating composition of the invention may also contain, if necessary, a reactive group-containing resin (D) as a base resin component in addition to the acryl-modified polyester resin (A). The reactive group-containing resin (D) is not particularly restricted so long as it is a resin containing a reactive group, and examples include acrylic resins, polyester resins, polyurethane resins, urethane-modified polyester resins, acryl-modified urethane resins and epoxy resins.

A "reactive group" is a reactive functional group that can undergo crosslinking reaction. Specifically, it may be a reactive functional group such as a hydroxyl, acid, carbonyl, N-methylolalkyl ether, isocyanate, epoxy, amino, alkoxysilyl, carbodiimide or hydrazide group.

According to the invention, an acrylic resin, polyester resin, polyurethane resin or the like is suitable to be used.

The acrylic resin (also to be referred to as "acrylic resin (D-1)") is a resin other than the aforementioned acryl-modified polyester resin (A), and it is an acrylic resin that can by synthesized by copolymerization of a polymerizable unsaturated monomer, such as a vinyl monomer.

The acrylic resin may be either one synthesized by emulsion polymerization or one synthesized by solution polymerization, or a combination of both. When the acrylic resin is synthesized by solution polymerization, the organic solvent used for the reaction is preferably a hydrophilic organic solvent such as a propylene glycol ether-based or dipropylene glycol ether-based solvent, for example. From the viewpoint of water dispersibility, the acrylic resin is preferably one with an acidic group such as a carboxyl group.

When the acrylic resin is to be synthesized by emulsion polymerization, it can be easily obtained by emulsion polymerization of the monomer components in the presence of an emulsifying agent, for example. The emulsifying agent may be a nonionic surfactant, an anionic surfactant or a reactive surfactant with a copolymerizable unsaturated group, and the acrylic resin may be obtained by emulsion polymerization using a polymerization initiator in the presence of one or more of these emulsifying agents. It can also be obtained by publicly known suspension polymerization, instead of emulsion polymerization.

The polymerizable unsaturated monomer may be any conventional known one, and for example, reactive group-containing polymerizable unsaturated monomers and other polymerizable unsaturated monomers may be used.

Examples of reactive groups of reactive group-containing polymerizable unsaturated monomers include reactive functional groups such as hydroxyl, acid, carbonyl, N-methylolalkyl ether, isocyanate, epoxy, amino, alkoxysilyl, carbodiimide and hydrazide groups.

Examples of hydroxyl group-containing polymerizable unsaturated monomers include 2-hydroxyethyl (meth)acrylate, hydroxypropyl (meth)acrylate, 4-hydroxybutyl (meth)acrylate, tetrahydrofurfuryl (meth)acrylate, ε-caprolactone-modified tetrahydrofurfuryl (meth)acrylate, ε-caprolactone-modified hydroxyethyl (meth)acrylate, polyethyleneglycol mono(meth)acrylate, polypropylene glycol mono(meth)acrylate, 2-hydroxy-3-phenoxypropyl (meth)acrylate, 2-hydroxy-3-butoxypropyl (meth)acrylate and monohydroxyethyl phthalate (meth)acrylate.

Acid group-containing polymerizable unsaturated monomers include carboxyl group- or acid anhydride group-containing polymerizable unsaturated monomers.

Examples of carboxyl group- or acid anhydride group-containing polymerizable unsaturated monomers include unsaturated carboxylic acids such as acrylic acid, methacrylic acid, maleic acid, fumaric acid, crotonic acid, itaconic acid and β-carboxyethyl acrylate, and their acid anhydrides.

Acid group-containing polymerizable unsaturated monomers with groups other than carboxyl or acid anhydride groups include 2-acrylamide-2-methylpropanesulfonic acid, allylsulfonic acid, sodium styrenesulfonate and sulfoethyl methacrylate, and their sodium salt and ammonium salts.

Examples of carbonyl group-containing polymerizable unsaturated monomers include acrolein, diacetone acrylamide, diacetone methacrylamide, formylstyrol, and vinyl alkyl ketones of 4 to 7 carbon atoms such as vinyl methyl ketone, vinyl ethyl ketone and vinyl butyl ketone. Diacetone acrylamide and diacetone methacrylamide are particularly preferred among these.

An example of an N-methylolalkyl ether group-containing polymerizable unsaturated monomer is N-methylolacrylamide butyl ether.

Isocyanate group-containing polymerizable unsaturated monomers are compounds having at least one unblocked isocyanate group and one radical-polymerizing double bond in the molecule, and examples include methacryloyl isocyanate, 2-isocyanatoethyl methacrylate, m- or p-isopropenyl-$\alpha,\alpha'$-dimethylbenzyl isocyanate, and 1:1 (molar ratio) addition products of hydroxyl group-containing polymerizable unsaturated monomers and diisocyanate compounds (for example, equimolar addition product of 2-hydroxyethyl acrylate and isophorone diisocyanate).

Examples of epoxy group-containing polymerizable unsaturated monomers include glycidyl acrylate, glycidyl methacrylate, CYCLOMER A-200 (an alicyclic epoxy group-containing monomer) and CYCLOMER M-100 (an alicyclic epoxy group-containing monomer).

Examples of amino group-containing polymerizable unsaturated monomers include dimethylaminoethyl acrylate, dimethylaminoethyl methacrylate, diethylaminoethyl acrylate, diethylaminoethyl methacrylate, dimethylaminopropylacrylamide and dimethylaminopropylmethacrylamide.

Examples of alkoxysilyl group-containing polymerizable unsaturated monomers include vinyltrimethoxysilane, vinyltriethoxysilane, vinyltripropoxysilane, vinyltributoxysilane, (meth)acryloyloxymethyltrimethoxysilane, (meth)acryloyloxyethyltrimethoxysilane, $\gamma$-(meth)acryloyloxypropyltrimethoxysilane, $\gamma$-(meth)acryloyloxypropyltriethoxysilane, (meth)acryloyloxyethyltriethoxysilane, (meth)acryloyloxypropyltributoxysilane, vinyltris-$\beta$-methoxyethoxysilane, divinylmethoxysilane and divinyldi-$\beta$-methoxyethoxysilane.

Examples of other polymerizable unsaturated monomers include C1 to C24 alkyl or cycloalkyl esters of (meth)acrylic acid such as methyl (meth)acrylate, ethyl (meth)acrylate, butyl (meth)acrylate, 2-ethylhexyl (meth)acrylate, lauryl (meth)acrylate and cyclohexyl (meth)acrylate; C1 to C16 alkoxyalkyl esters of (meth)acrylic acid such as methoxybutyl acrylate, methoxybutyl methacrylate, methoxyethyl acrylate, methoxyethyl methacrylate, ethoxybutyl acrylate, ethoxybutyl methacrylate and phenoxyethyl (meth)acrylate; aromatic unsaturated monomers such as styrene, vinyltoluene, $\alpha$-methylstyrene, N-vinylpyrrolidone and vinylpyridine; olefins such as ethylene, propylene, butylene and pentene; diene compounds such as butadiene, isoprene and chloroprene; addition products of cyclohexenyl (meth)acrylate, dicyclopentenyl (meth)acrylate, dicyclopentenyloxyethyl (meth)acrylate, isobornyl (meth)acrylate, benzyl (meth)acrylate, N-butoxy(meth)acrylamide and glycidyl (meth)acrylate with amines, and vinyl propionate, vinyl acetate, vinyl pivalate or VeoVa monomer (product of Shell Chemicals, Japan).

From the viewpoint of weather resistance and finished appearance, the weight-average molecular weight of the acrylic resin (D-1) is preferably in the range of 1000 to 200,000 and especially 2000 to 100,000, when synthesis is by solution polymerization.

When the acrylic resin (D-1) has a hydroxyl group, its hydroxyl value is preferably 10 to 250 mgKOH/g and especially 30 to 150 mgKOH/g when synthesis is by solution polymerization, from the viewpoint of curability of the coating film. When synthesis is by emulsion polymerization, it is preferably 5 to 150 mgKOH/g and especially 10 to 90 mgKOH/g, from the viewpoint of the water resistance and curability of the coating film.

When the acrylic resin (D-1) has an acid group, its acid value is preferably 3 to 150 mgKOH/g and especially 5 to 70 mgKOH/g when synthesis is by solution polymerization, from the viewpoint of dispersion stability in the aqueous coating material, and the curability and adhesion of the coating film. When synthesis is by emulsion polymerization, it is preferably 0.01 to 100 mgKOH/g and especially 0.1 to 75 mgKOH/g, from the viewpoint of the water resistance of the coating film.

When the acrylic resin (D-1) has an acid group and is in an aqueous dispersion, preferably neutralization is carried out with a neutralizing agent from the viewpoint of increasing the water-dispersibility, in order to facilitate mixing and dispersion in water.

Examples of neutralizing agents include alkali metal or alkaline earth metal hydroxides such as sodium hydroxide, potassium hydroxide, lithium hydroxide, calcium hydroxide and barium hydroxide; ammonia; primary monoamine compounds such as ethylamine, propylamine, butylamine, cyclohexylamine, monoethanolamine, isopropanolamine, neopentanolamine, 2-aminopropanol, 3-aminopropanol and 2-amino-2-methylpropanol; secondary monoamine compounds such as diethylamine, dibutylamine, diethanolamine, dipropylamine, diisopropanolamine, N-methylethanolamine, N-ethylethanolamine and N-methylisopropanolamine; tertiary monoamine compounds such as triethylamine, tributylamine, dimethylethanolamine, diethylethanolamine, methyldiethanolamine, dimethylaminoethanol and triethanolamine; polyamine compounds such as ethylenediamine, diethylenetriamine, hydroxyethylaminoethylamine, ethylaminoethylamine and methylaminopropylamine; pyridine; and morpholine.

Among these, primary monoamine compounds, secondary monoamine compounds, tertiary monoamine compounds and polyamine compounds are preferred for use.

The polyester resin (also to be referred to as "polyester resin (D-2)") is a polyester resin that can be synthesized by esterification reaction between a polybasic acid and a polyhydric alcohol, by a known process according to a common method. From the viewpoint of water dispersibility, the polyester resin is preferably one with an acid group such as a carboxyl group.

A polybasic acid is a compound having two or more carboxyl groups in the molecule, and examples include phthalic acid, isophthalic acid, terephthalic acid, succinic acid, adipic acid, azelaic acid, sebacic acid, naphthalenedicarboxylic acid, 4,4-diphenyldicarboxylic acid, diphenylmethane-4,4'-dicarboxylic acid, chlorendic acid, maleic acid, fumaric acid, itaconic acid, trimellitic acid, pyromellitic acid, cyclohexane-1,3-dicarboxylic acid, cyclohexane-1,4-dicarboxylic acid, hexahydrophthalic acid, hexahydroisophthalic acid, hexahydroterephthalic acid, tetrahydrophthalic acid, hexahydrotrimellitic acid, methylhexahydrophthalic acid, and anhydrides of the same.

A polyhydric alcohol is a compound having two or more hydroxyl groups in the molecule, and examples include glycols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 1,2-pentanediol, 1,5-pentanediol, 1,4-pentanediol, 2,4-pentanediol, 2,3-dimethyltrimethylene glycol, tetramethylene glycol, 3-methyl-4,5-pentanediol, 2,2,4-trimethyl-1,3-pentanediol, 1,6-hexanediol, 1,5-hexanediol, 1,4-hexanediol, 2,5-hexanediol, neopentyl glycol and neopentyl glycol hydroxy pivalate, polylactone diols obtained by adding lactones such as ε-caprolactone to these glycols, polyester diols such as bis(hydroxyethyl)terephthalate, 1,3-cyclohexanedimethanol, 1,4-cyclohexanedimethanol, tricyclodecanedimethanol, hydrogenated bisphenol A, hydrogenated bisphenol F, spiroglycol, dihydroxymethyltricyclodecane, glycerin, trimethylolpropane, trimethylolethane, diglycerin, triglycerin, 1,2,6-hexanetriol, pentaerythritol, dipentaerythritol, dipentaerythritol, sorbitol, mannitol, and hydroxycarboxylic acids such as 2,2-dimethylolpropionic acid, 2,2-dimethylolbutanoic acid, 2,2-dimethylolpentanoic acid, 2,2-dimethylolhexanoic acid and 2,2-dimethyloloctanoic acid.

The polyester resin (D-2) may be a fatty acid-modified polyester resin obtained by modification with a (half) dry oil fatty acid such as linseed oil fatty acid, coconut oil fatty acid, safflower oil fatty acid, soybean oil fatty acid, sesame oil fatty acid, perilla oil fatty acid, hemp oil fatty acid, tall oil fatty acid or dehydrated castor oil fatty acid. The degree of modification by these fatty acids is generally suitable at up to 30 wt% in terms of oil length. The polyester resin may also be one that has been partially reacted with a monobasic acid such as benzoic acid.

The polyester resin (D-2) may also be one obtained by reacting a monoepoxy compound such as an α-olefin epoxide such as propylene oxide or butylene oxide, or CARDURA E10 (trade name of Japan Epoxy Resins Co., Ltd., glycidyl ester of synthetic highly-branched saturated fatty acid) with the acid groups of the polyester resin.

When a carboxyl group is to be introduced into the polyester resin (D-2), it may be introduced, for example, by adding an acid anhydride to a hydroxyl group-containing polyester to form a half-ester.

When the polyester resin (D-2) has a hydroxyl group, its hydroxyl value is preferably 10 to 250 mgKOH/g and especially 40 to 170 mgKOH/g, from the viewpoint of water resistance and curability of the coating film.

When the polyester resin (D-2) has an acid group, its acid value is preferably 5 to 100 mgKOH/g and especially 10 to 60 mgKOH/g, from the viewpoint of water resistance and adhesion of the coating film.

The number-average molecular weight of the polyester resin (D-2) is preferably 1000 to 100,000 and especially 1000 to 50,000, from the viewpoint of water resistance and curability of the coating film.

When the polyester resin (D-2) has an acid group and is in an aqueous dispersion, preferably neutralization is carried out with a neutralizing agent from the viewpoint of increasing the water-dispersibility, in order to facilitate mixing and dispersion in water.

The neutralizing agent used may be any of the same examples mentioned for the acrylic resin (D-1).

The polyurethane resin (also to be referred to as "polyurethane resin (D-3)") may be any one that is obtained by reaction between at least one type of diisocyanate compound selected from among aliphatic diisocyanate compounds, alicyclic diisocyanate compounds and aromatic diisocyanate compounds, and at least one type of polyol compound selected from among polyether polyols, polyester polyols and polycarbonate polyols, by a known process according to a common method. Specifically, it may be one obtained by reacting at least one type of diisocyanate compound selected from among aliphatic diisocyanates and alicyclic diisocyanates, at least one type of diol selected from among polyether diols, polyester diols and polycarbonate diols, a low-molecular-weight polyhydroxy compound and a dimethylolalkanoic acid to produce a urethane prepolymer, neutralizing it with a tertiary amine, forming an emulsified dispersion in water, and then if necessary, mixing it with an aqueous medium containing a chain extender such as a polyamine, a crosslinking agent or a terminator, and reacting until the isocyanate groups are essentially consumed. This method can yield a self-emulsifiable polyurethane resin having a mean particle diameter of usually 0.001 to 3 μm.

Crosslinking agent (B)

The crosslinking agent (B) may be added as necessary and it is not particularly restricted, but a crosslinking agent having reactivity with the reactive group may be used, depending on the crosslinking reactive group when the acryl-modified polyester resin (A) has a crosslinking reactive group, and on the reactive group of the reactive group-containing resin (D).

Specific compounds for the crosslinking agent (B) include amino resins, polyisocyanate compounds, polyhydrazide compounds, polysemicarbazide compounds, carbodiimide group-containing compounds, oxazoline group-containing compounds, epoxy compounds and polycarboxylic acids. These crosslinking agents may be used alone, or two or more may be used in combination.

The amino resin used may be a partially methylolated amino resin or totally methylolated amino resin, obtained by reacting an amino component and an aldehyde component. Examples of amino components include melamine, urea, benzoguanamine, acetoguanamine, steroguanamine, spiroguanamine and dicyandiamide. Aldehyde components include formaldehyde, paraformaldehyde, acetaldehyde and benzaldehyde.

Also, the methylol groups in the methylolated amino resin may be partially or completely etherified with a suitable alcohol. Examples of alcohols to be used for the etherification include methyl alcohol, ethyl alcohol, n-propyl alcohol, i-propyl alcohol, n-butyl alcohol, i-butyl alcohol, 2-ethyl-1-butanol and 2-ethyl-1-hexanol.

The amino resin is preferably a melamine resin. Most preferably, it is a methyl etherified melamine resin wherein the methylol groups of a partially or totally methylolated melamine resin are partially or totally etherified with methyl alcohol, a butyl etherified melamine resin wherein the methylol groups of a partially or totally methylolated melamine resin are partially or totally etherified with butyl alcohol, or a methyl-butyl mixed etherified melamine resin wherein the methylol groups of a partially or totally methylolated melamine resin are partially or totally etherified with methyl alcohol and butyl alcohol, and more preferably it is a methyl-butyl mixed etherified melamine resin.

The melamine resin has a weight-average molecular weight of preferably 400 to 6,000, more preferably 500 to 4,000 and even more preferably 600 to 3,000.

The melamine resin used may be a commercial product. Examples of trade names of commercial products include "CYMEL 202", "CYMEL 203", "CYMEL 204", "CYMEL 211", "CYMEL 212", "CYMEL 238", "CYMEL 251", "CYMEL 253", "CYMEL 254", "CYMEL 303", "CYMEL 323", "CYMEL 324", "CYMEL 325", "CYMEL 327", "CYMEL 350", "CYMEL 370", "CYMEL 380", "CYMEL 385", "CYMEL 1156", "CYMEL 1158", "CYMEL 1116" and "CYMEL 1130"(all by Nihon Cytec Industries Inc.); "RESIMENE 735", "RESIMENE 740", "RESIMENE 741", "RESIMENE 745", "RESIMENE 746" and "RESIMENE 747" (all by Monsanto Corp.); "U-VAN 120", "U-VAN 20HS", "U-VAN 20SE", "U-VAN 2021", "U-VAN 2028" and "U-VAN 28-60" (all by Mitsui Chemicals, Inc.); and "SUMIMAL M55", "SUMIMAL M30W" and "SUMIMAL M50W" (all by Sumitomo Chemical Co., Ltd.).

When a melamine resin is used as the crosslinking agent (B), the curing catalyst used may be a sulfonic acid such as para-toluenesulfonic acid, dodecylbenzenesulfonic acid or dinonylnaphthalenesulfonic acid; a neutral salt of the sulfonic acid and an amine; or a neutral salt of a phosphoric acid ester compound and an amine.

A polyisocyanate compound is a compound having two or more isocyanate groups in the molecule.

Specific examples of polyisocyanate compounds include aliphatic polyisocyanates, alicyclic polyisocyanates, aromatic aliphatic polyisocyanates, aromatic polyisocyanates and derivatives of these polyisocyanates.

Examples of aliphatic polyisocyanates include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate and 2,6-diisocyanatomethyl caproate; and aliphatic triisocyanates such as lysine ester triisocyanate, 1,4,8-triisocyanatooctane, 1,6,11-triisocyanatoundecane, 1,8-diisocyanato-4-isocyanatomethyloctane, 1,3,6-triisocyanatohexane and 2,5,7-trimethyl-1,8-diisocyanato-5-isocyanatomethyloctane.

Examples of alicyclic polyisocyanates include alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4,4'-methylenebis(cyclohexyl isocyanate), methyl-2,4-cyclohexane diisocyanate, methyl-2,6-cyclohexane diisocyanate, 1,3- or 1,4-bis(isocyanatomethyl)cyclohexane (common name: hydrogenated xylylene diisocyanate) or its mixtures, and norbornane diisocyanate; and alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane and 6-(2-isocyanatoethyl)-2-isocyanatomethyl-2-(3-isocyanatopropyl)-bicyclo(2.2.1)heptane.

Examples of aromatic/aliphatic polyisocyanates include aromatic/aliphatic diisocyanates such as 1,3- or 1,4-xylylene diisocyanate or mixtures thereof, ω,ω'-diisocyanato-1,4-diethylbenzene and 1,3- or 1,4-bis(1-isocyanato-1-methylethyl)benzene (common name: tetramethylxylylene diisocyanate) or mixtures thereof; and aromatic/aliphatic triisocyanates such as 1,3,5-triisocyanatomethylbenzene.

Examples of aromatic polyisocyanates include aromatic diisocyanates such as m-phenylene diisocyanate, p-phenylene diisocyanate, 4,4'-diphenyl diisocyanate, 1,5-naphthalene diisocyanate, 2,4'- or 4,4'-diphenylmethane diisocyanate or their mixtures, 2,4- or 2,6-tolylene diisocyanate or their mixtures, 4,4'-toluidine diisocyanate and 4,4'-diphenyl ether diisocyanate; aromatic triisocyanates such as triphenylmethane-4,4',4"-triisocyanate, 1,3,5-triisocyanatobenzene, 2,4,6-triisocyanatotoluene; and aromatic tetraisocyanates such as diphenylmethane-2,2',5,5'-tetraisocyanate.

Examples of the aforementioned polyisocyanate derivatives include the aforementioned polyisocyanate compound dimers, trimers, biurets, allophanates, carbodiimides, urethodiones, urethoimines, isocyanurates, oxadiazinetriones, polymethylenepolyphenyl polyisocyanate (crude MDI, polymeric MDI) and crude TDI.

Polyisocyanate compounds that may be used include blocked polyisocyanate compounds having the free isocyanate groups sealed with a blocking agent. A blocked polyisocyanate compound may be heated at 100°C or higher and preferably 130°C or higher, for example, to regenerate the isocyanate groups and facilitate reaction with reactive groups.

Examples of such blocking agents include phenol-based compounds such as phenol, cresol, xylenol, nitrophenol, ethylphenol, hydroxydiphenyl, butylphenol, isopropylphenol, nonylphenol, octylphenol and methyl hydroxybenzoate; lactam-based compounds such as ε-caprolactam, δ-valerolactam, γ-butyrolactam and β-propiolactam; aliphatic alcohol-based compounds such as methanol, ethanol, propyl alcohol, butyl alcohol, amyl alcohol and lauryl alcohol; ether-based compounds such as ethyleneglycol monomethyl ether, ethyleneglycol monoethyl ether, ethyleneglycol monobutyl ether, diethyleneglycol monomethyl ether, diethyleneglycol monoethyl ether, propyleneglycol monomethyl ether and methoxymethanol; benzyl alcohols; glycolic acids; glycolic acid esters such as methyl glycolate, ethyl glycolate and butyl glycolate; lactic acid esters such as lactic acid, methyl lactate, ethyl lactate and butyl lactate; alcohol-based compounds such as methylolurea, methylolmelamine, diacetone alcohol, 2-hydroxyethyl acrylate and 2-hydroxyethyl methacrylate; oxime-based compounds such as formamideoxime, acetamideoxime, acetooxime, methylethylketooxime, diacetylmonooxime, benzophenoneoxime and cyclohexaneoxime; active methylene-based compounds such as dimethyl malonate, diethyl malonate, ethyl acetoacetate, methyl acetoacetate and acetylacetone; mercaptane-based compounds such as butylmercaptane, t-butylmercaptane, hexylmercaptane, t-dodecylmercaptane, 2-mercaptobenzothiazole, thiophenol, methylthiophenol and ethylthiophenol; acid amide-based compounds such as acetoanilide, acetanisidide, acetotoluide, acrylamide, methacrylamide, acetic acid amide, stearic acid amide and benzamide; imide-based compounds such as succinic acid imide, phthalic acid imide and maleic acid imide; amine-based compounds such as diphenylamine, phenylnaphthylamine, xylidine, N-phenylxylidine, carbazole, aniline, naphthylamine, butylamine, dibutylamine and butylphenylamine; imidazolebased compounds such as imidazole and 2-ethylimidazole; pyrazole-based compounds such as 3,5-dimethylpyrazole; urea-based compounds such as urea, thiourea, ethyleneurea, ethylenethiourea and diphenylurea; carbamic acid ester-based compounds such as phenyl N-phenylcarbamate; imine-based compounds such as ethyleneimine and propyleneimine; and sulfurous acid salt-based compounds such as sodium bisulfite and potassium bisulfite.

When a polyisocyanate compound is used as the crosslinking agent (B), an organic tin compound or the like may be used as a curing catalyst.

The polyisocyanate compound may be used as a crosslinking agent for a hydroxyl groupor amino group-containing resin.

A polyhydrazide compound is a compound having two or more hydrazide groups in the molecule. Examples of polyhydrazide compounds include saturated aliphatic carboxylic acid dihydrazides with 2 to 18 carbon atoms such as oxalic acid dihydrazide, malonic acid dihydrazide, succinic acid dihydrazide, glutaric acid dihydrazide, adipic acid dihydrazide and sebacic acid dihydrazide; dihydrazides of monoolefinic unsaturated dicarboxylic acids such as maleic acid dihydrazide, fumaric acid dihydrazide and itaconic acid dihydrazide; polyhydrazides of carbonic acids such as carbonic acid dihydrazide; polyhydrazides of aromatic polycarboxylic acids such as phthalic acid, terephthalic acid or isophthalic acid dihydrazide, and pyromellitic acid dihydrazide, trihydrazide or tetrahydrazide; aliphatic trihydrazides such as nitrilotriacetic acid trihydrazide, citric acid trihydrazide and 1,2,4-benzene trihydrazide; tetrahydrazides such as ethylenediaminetetraacetic acid tetrahydrazide and 1,4,5,8-naphthoic acid tetrahydrazide; and polyhydrazides obtained by reacting low polymers having lower alkyl carboxylic acid ester groups, with hydrazine or hydrazine hydrate (see Japanese Examined Patent Publication SHO No. 52-22878).

If the polyhydrazide compound has excessively strong hydrophobicity it will be difficult to form an aqueous dispersion, and a uniform crosslinked coating film will not be obtainable, and therefore it is preferred to use a compound with a relatively low molecular weight (about ≤300) and suitably hydrophilicity. Examples of such polyhydrazide compounds include dihydrazide compounds of C4 to C12 dicarboxylic acids, such as succinic acid dihydrazide, glutaric acid dihydrazide, adipic acid dihydrazide and sebacic acid dihydrazide.

The polyhydrazide compound may be used as a crosslinking agent for a resin containing a carbonyl group, for example.

A polysemicarbazide compound is a compound having two or more semicarbazide groups in the molecule. Examples of polysemicarbazide compounds include aliphatic, alicyclic or aromatic bissemicarbazides; polyfunctional semicarbazides obtained by reacting a diisocyanate such as hexamethylene diisocyanate or isophorone diisocyanate or a polyisocyanate compound derived from it, with an excess of a N,N-substituted hydrazine such as N,N-dimethylhydrazine or one of the hydrazides mentioned above, and aqueous polyfunctional semicarbazides obtained by reacting an excess of one of the dihydrazides mentioned above with the isocyanate groups in the reaction product of the polyisocyanate compound, a polyether and a polyol or an active hydrogen compound including a hydrophilic group such as a polyethyleneglycol monoalkyl ether (see Japanese Unexamined Patent Publication No. H08-151358, for example); compounds with semicarbazide groups such as mixtures of polyfunctional semicarbazides and aqueous polyfunctional semicarbazides; and hydrazone group-containing compounds such as bisacetyldihydrazone.

The polysemicarbazide compound may be used as a crosslinking agent for a resin containing a carbonyl group, for example.

Carbodiimide group-containing compounds are compounds obtained by subjecting the isocyanate groups of the polyisocyanate compound to carbon dioxide removal reaction, for example. Examples of commercial products include "CARBODILITE V-02", "CARBODILITE V-02-L2", "CARBODILITE V-04", "CARBODILITE E-01" and "CARBODILITE E-02" (all trade names of Nisshinbo Industries, Inc.).

A carbodiimide group-containing compound may be used as a crosslinking agent for a carboxyl group-containing resin, for example.

Oxazoline group-containing compounds include polymers with oxazoline groups, including (co)polymers obtained by copolymerization of polymerizable unsaturated monomers having oxazoline groups, with other polymerizable unsaturated monomers as necessary, using conventionally known methods (for example, solution polymerization or emulsion polymerization).

Examples of polymerizable unsaturated monomers with oxazoline groups include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline.

Examples of such other polymerizable unsaturated monomers include C1 to 24 alkyl or cycloalkyl esters of (meth)acrylic acid, such as methyl (meth)acrylate, ethyl (meth)acrylate, propyl (meth)acrylate, butyl (meth)acrylate, 2-ethylhexyl (meth)acrylate, cyclohexyl (meth)acrylate, lauryl (meth)acrylate and isobornyl (meth)acrylate; C2 to 8 hydroxyalkyl esters of (meth)acrylic acids such as 2-hydroxyethyl (meth)acrylate and hydroxypropyl (meth)acrylate; vinyl aromatic compounds such as styrene and vinyltoluene; addition products of (meth)acrylamide, dimethylaminopropyl (meth)acrylamide, dimethylaminoethyl (meth)acrylate and glycidyl (meth)acrylate with amines; polyethylene glycol (meth)acrylate, and N-vinylpyrrolidone, ethylene, butadiene, chloroprene, vinyl propionate, vinyl acetate, (meth)acrylonitrile and the like. Any one or more of these may be selected for use.

An oxazoline group-containing compound may be used as a crosslinking agent for a carboxyl group-containing resin, for example.

An epoxy compound is a compound having two or more epoxy groups in the molecule. Specifically, it may be a diepoxy compound such as bis(3,4-epoxycyclohexylmethyl) adipate, or an epoxy group-containing acrylic resin.

The epoxy compound may be used as a crosslinking agent for an acid group- or amino group-containing resin, for example.

Examples of polycarboxylic acids include aliphatic polybasic acids such as adipic acid, azelaic acid, sebacic acid, 1,4-cyclohexanedicarboxylic acid, 1,2-cyclohexanedicarboxylic acid, 1,2,4-butanetricarboxylic acid and 1,2,3,4-butanetetracarboxylic acid; aromatic polybasic acids such as phthalic acid, isophthalic acid, terephthalic acid and trimellitic acid; half esters produced by addition reaction of polyols and 1,2-acid anhydrides; addition reaction products of polyepoxides and 1,2-acid anhydrides at 2 equivalents or greater with respect to the epoxy groups of the polyepoxide; carboxyl group-containing acrylic-based polymers; acrylic-based polymers having groups formed by half-esterification of acid anhydride groups; and carboxyl group-containing polyester-based copolymers.

A polycarboxylic acid may be used as a crosslinking agent for an epoxy group- or carbodiimide group-containing resin, for example.

Epoxy phosphoric acid ester compound (C)

The epoxy phosphoric acid ester compound (C) will usually be one that is obtained by addition of a phosphoric acid compound to an epoxy resin, and having a hydroxyl group and a phosphoric acid residue in the molecule.

Examples of epoxy resins include bisphenol-type epoxy resins, novolac-type epoxy resins, and modified epoxy resins obtained by reacting a modifying agent with the epoxy groups or hydroxyl groups of such epoxy resins. The bisphenol-type epoxy resin may be, for example, a resin obtained by condensation of epichlorohydrin and bisphenol to a high molecular weight, in the presence of a catalyst such as an alkali catalyst if necessary, or a resin obtained by condensation of epichlorohydrin and bisphenol to obtain a low-molecular-weight epoxy resin, in the presence of a catalyst such as an alkali catalyst if necessary, and conducting polyaddition reaction of the low molecular weight epoxy resin and bisphenol. The epoxy equivalent may be 172 to 4,000, and is preferably 175 to 1,000.

Examples of bisphenols include bis(4-hydroxyphenyl)methane[bisphenol F], 1,1-bis(4-hydroxyphenyl)ethane, 2,2-bis(4-hydroxyphenyl)propane[bisphenol A], 2,2-bis(4-hydroxyphenyl)butane[bisphenol B], bis(4-hydroxyphenyl)-1,1-isobutane, bis(4-hydroxy-tert-butyl-phenyl)-2,2-propane, p-(4-hydroxyphenyl)phenol, oxybis(4-hydroxyphenyl), sulfonylbis(4-hydroxyphenyl), 4,4'-dihydroxybenzophenone and bis(2-hydroxynaphthyl)methane. These bisphenols may be used alone or as mixtures of two or more.

Examples of novolac-type epoxy resins include phenol-novolac-type epoxy resins, cresol-novolac-type epoxy resins, and phenolglyoxal-type epoxy resins having multiple epoxy groups in the molecule.

Phosphoric acid compounds include orthophosphoric acid and pyrophosphoric acid. The epoxy phosphoric acid ester compound (C) can be produced by adding a phosphoric acid compound to an epoxy resin, and conducting reaction at a reaction temperature of 70 to 150°C and preferably 110 to 130°C, for a reaction time of 1 to 8 hours and preferably 3 to 6 hours, in the presence of a catalyst such as an imidazole or phosphonium salt, for example. Preferably, reaction is conducted with a ratio of H+ atoms of the phosphoric acid compound with respect to 1 mol of oxirane groups of the epoxy resin in the range of H+/oxirane group = 0.5 to 3 and preferably 1 to 3.

The acid value of the epoxy phosphoric acid ester compound (C) obtained in this manner is preferably in the range of 5 to 70 mgKOH/g, more preferably 28 to 60 mgKOH/g and even more preferably 35 to 57 mgKOH/g, from the viewpoint of waterproof adhesiveness and base material adhesion.

Examples of commercial products for the epoxy phosphoric acid ester compound (C) include XU-8096.07, XU-71899.00, XQ-82908.00, XQ-82919.00, DER620-PP50, DER621-EB50 and DER621-PP50 (all trade names of The Dow Chemical Company, Japan), and EPOTOHTO ZX1300 and ZX1300-1 (all trade names of Tohto Kasei Co., Ltd.).

The content of such epoxy phosphoric acid ester compounds (C) is in the range of 0.1 to 10.0 parts by mass, preferably 0.3 to 8.0 parts by mass and more preferably 0.5 to 6.0 parts by mass with respect to 100 parts by mass as the total solid content of (A) and (B). If the epoxy phosphoric acid ester compound (C) content is less than 0.1 part by mass, it may not be possible to obtain waterproof adhesiveness and base material adhesion, while if it exceeds 10.0 parts by mass, the coating stability and the flexibility of the obtained coating film will be undesirably impaired.

Aqueous coating composition

The amounts of the acryl-modified polyester resin (A), reactive group-containing resin (D) and crosslinking agent (B) in the aqueous coating composition of the invention are in the range of 10 to 65 mass%, preferably 10 to 60 mass% and more preferably 15 to 55 mass% for the acryl-modified polyester resin (A), in the range of 0 to 85 mass%, preferably 0 to 80 mass% and more preferably 10 to 65 mass% for the reactive group-containing resin (D), and in the range of 5 to 60 mass%, preferably 10 to 50 mass% and more preferably 20 to 45 mass% for the crosslinking agent (B), based on the total solid resin content of component (A), component (D) and component (B).

A pigment may also be used in the aqueous coating composition of the invention if necessary. Examples of pigments that are suitable for use include color pigments such as titanium oxide, zinc oxide, carbon black, phthalocyanine blue, Prussian blue, cobalt blue, azo pigments, phthalocyanine pigments, quinacridone pigments, isoindoline pigments, threne-based pigments and perylene pigments; extender pigments such as talc, clay, kaolin, baryta, barium sulfate, barium carbonate, calcium carbonate, silica and alumina white; brightness pigments such as aluminum powder, mica powder and titanium oxide-coated mica powder.

The pigment content is generally suitable in the range of 0 to 250 mass%, and especially 3 to 150 mass%, based on the total solid resin content of component (A), component (B) and component (C) (and also including component (D) when it is used).

The aqueous coating composition of the invention may also contain, as appropriate and necessary, curing catalysts, dispersing agents, anti-settling agents, organic solvents, antifoaming agents, thickening agents, ultraviolet absorbers, light stabilizers and surface control agents.

The aqueous coating composition of the invention can yield a coating film with excellent film performance including chipping resistance, and an excellent finished appearance including coating surface smoothness, while also having excellent storage stability, and it is therefore suited for use as a coating composition for building materials, construction, automobiles and the like.

The aqueous coating composition of the invention may be applied by a conventionally known method such as roller coating, air spray coating, airless spray coating, rotary atomizing coating or curtain coating. An electrostatic charge may also be applied if necessary in these coating methods. Such coating methods may be carried out once or several times, until the desired film thickness is obtained. The film thickness is preferably in the range of 3 to 100 $\mu$m and especially 5 to 60 $\mu$m, based on the cured coating film, and the coating film can be cured by heating at room temperature to 170°C, for example, as necessary. Heat curing may be carried out by known heating means, using a drying furnace such as an air heating furnace, electric furnace or electromagnetic induction heating furnace, for example. If necessary, preheating may be carried out for about 3 to 10 minutes at a temperature of about 50 to 80°C before heat curing, in order to promote volatilization of the volatile components such as the solvent.

The articles to be coated are not particularly restricted, but preferred examples include metal materials including steel sheets such as cold-rolled steel sheets, galvanized steel sheets, zinc alloy-plated steel sheets, stainless steel sheets and tin-plated steel sheets, or aluminum sheets or aluminum alloy sheets; plastic materials including resins such as polyethylene resins, polypropylene resins, acrylonitrile-butadiene-styrene (ABS) resins, polyamide resins, acrylic resins, vinylidene chloride resins, polycarbonate resins, polyurethane resins and epoxy resins, or various FRPs; and concrete slabs, mortar slabs, slate boards, roofing tiles, PC boards, ALC boards, cement, cement-calcium silicate boards, ceramics, tiles, glass, wood, stone and coated film surfaces. Metal materials and plastic materials are preferred among these.

The article may also be a vehicle body of any of various types of vehicles such as automobiles, two-wheel vehicles or hauling containers, or building materials, that are formed of such materials.

The article to be coated may also be an article that is a metal base material or has a metal surface such as a car body formed thereof, and that has been surface-treated by phosphate treatment, chromate treatment or complex oxide treatment.

Such articles to be coated may be given a primer coating (for example, by cationic electrodeposition or primer application) in advance.

For use, the aqueous coating composition of the invention may be applied after adding water and/or an organic solvent for dilution to adjust it to the appropriate viscosity, as necessary.

The appropriate viscosity will differ depending on the coating composition, but as an example, it may be a viscosity of about 1000 to 7000 mPa·s and preferably 2000 to 5000 mPa·s at 20°C, measured under conditions of 6 rpm with a Brookfield viscometer.

The solid concentration for coating of the coating material in this case is usually about 5 to 70 mass%, and preferably about 10 to 50 mass%.

The present invention is a multilayer coating film-forming method in which the following steps (1) to (4) are carried out in order, on an article to be coated:

step (1): a step of applying an aqueous first colored coating material (X) to form a first colored coating film,
step (2): a step of applying an aqueous second colored coating material (Y) onto the first colored coating film formed in step (1) to form a second colored coating film,
step (3): a step of applying a clear coating material (Z) onto the second colored coating film formed in step (2) to form a clear coating film, and
step (4): a step of heat curing the first colored coating film, second colored coating film and clear coating film formed in steps (1) to (3) all at once,

wherein the aqueous first colored coating material (X) is an aqueous coating composition of the invention.

Step (1)

In the multilayer coating film-forming method of the invention, first the aqueous coating composition of the invention is applied as the aqueous first colored coating material (X) onto an article to be coated. The article to be coated was described above. The coating amount of the aqueous first colored coating material (X) is usually preferred to be an amount of 5 to 40 $\mu$m, preferably 7 to 30 $\mu$m and more preferably 10 to 25 $\mu$m, as the cured film thickness.

Step (2)

The aqueous second colored coating material (Y) is then applied onto the uncured coating film (first colored coating film) formed by the aqueous first colored coating material (X) in step (1).

Before applying the aqueous second colored coating material (Y), the first colored coating film may be allowed to stand at room temperature, and if necessary further subjected to preheating, air blowing or the like under heating conditions that substantially do not cure the coating film. According to the invention, a "cured coating film" is a coating film in a cured dry state as specified by JIS K 5600-1-1, i.e. a state in which, when the center of the coating surface is firmly held between the thumb and the forefinger, no fingerprint indentation is formed on the coating surface, no movement of the coating film is felt, and no rubbing trace remains on the coating surface when the center of the coating surface is rapidly rubbed with the fingertips. An "uncured coating film", on the other hand, is one in a state in which the coating film has not reached the cured dry state, and this also includes a tack-free state and semi-cured dry state as specified by JIS K 5600-1-1.

The temperature for preheating is preferably 40 to 120°C, more preferably 60 to 100°C and even more preferably 70 to 90°C. The preheat time is preferably 30 seconds to 15 minutes, more preferably 1 to 12 minutes and even more preferably 2 to 10 minutes. Air blowing may also be carried out by blasting the coated surface of the article to be coated with heated air at a temperature of usually ordinary temperature or 25°C to 80°C, for a period of 30 seconds to 15 minutes.

The aqueous second colored coating material (Y) to be coated on the first colored coating film is generally for the purpose of imparting an excellent appearance to the article to be coated, and for example, it may be a coating material having a base resin such as an acrylic resin, polyester resin, alkyd resin, urethane resin or epoxy resin having crosslinkable functional groups such as carboxyl and hydroxyl, and a resin component comprising the crosslinking agent (B), dissolved or dispersed in water together with a pigment and other additives, to form a coating material.

The pigment used may be the aforementioned color pigment, extender pigment, brightness pigment or the like. Of these, the aqueous second colored coating material (Y) preferably contains a color pigment and/or a brightness pigment as at least one type of pigment.

The aqueous second colored coating material (Y) may further contain, as necessary, common coating material additives such as curing catalysts, thickening agents, ultraviolet absorbers, light stabilizers, antifoaming agents, plasticizers, organic solvents, surface control agents and anti-settling agents. These coating material additives may be used either alone or in combinations of two or more.

The aqueous second colored coating material (Y) may be coated by a known method such as air spraying, airless spraying, rotary atomizing coating or the like, and electrostatic application may be carried out during the coating. The coated film thickness may usually be in the range of 5 to 30 $\mu$m, preferably 8 to 25 $\mu$m and more preferably 10 to 20 $\mu$m, as the cured film thickness.

Step (3)

In the multilayer coating film-forming method of the invention, a clear coating material (Z) is coated on the uncured coating film (second colored coating film) that has been formed from the aqueous second colored coating material (Y) formed in step (2).

Before applying the clear coating material (Z), the second colored coating film is preferably subjected to preheating, air blowing or the like under heating conditions in which the coating film substantially does not cure. The temperature for preheating is preferably 40 to 100°C, more preferably 50 to 90°C and even more preferably 60 to 80°C. The preheating time is preferably 30 seconds to 15 minutes, more preferably 1 to 10 minutes and even more preferably 2 to 5 minutes. Air blowing may also be carried out by blasting the coated surface of the article to be coated with heated air at a temperature of usually ordinary temperature or 25°C to 80°C, for a period of 30 seconds to 15 minutes.

Before applying the clear coating material (Z), the second colored coating film is preferably subjected to preheating, air blowing or the like as necessary to adjust the coating film solid content to a range of usually 70 to 100 mass%, preferably 80 to 100 mass% and more preferably 90 to 100 mass%.

The clear coating material (Z) may be any thermosetting clear coating material composition that is known for coating onto automobile bodies and the like. The thermosetting clear coating material composition may be, for example, an organic solvent-type thermosetting coating composition, an aqueous thermosetting coating composition, a powder thermosetting coating composition, or the like, containing a base resin with a crosslinkable functional group, and a crosslinking agent.

Examples of crosslinkable functional groups in the base resin include carboxyl, hydroxyl, epoxy and silanol groups. Examples of types of resins for the base resin include acrylic resins, polyester resins, alkyd resins, urethane resins, epoxy resins and fluorine resins. Examples for the crosslinking agent include polyisocyanate compounds, blocked polyisocyanate compounds, melamine resins, urea resins, carboxyl group-containing compounds, carboxyl group-containing resins, epoxy group-containing resins and epoxy group-containing compounds.

Particularly preferred base resin/crosslinking agent combinations for the clear coating material (Z) include carboxyl group-containing resin/epoxy group-containing resin combinations, and hydroxyl group-containing resin/polyisocyanate compound combinations.

The clear coating material (Z) may also be a one-pack type coating material, or a multipack coating material such as a two-pack urethane resin coating material.

The clear coating material (Z) may also contain, as necessary, color pigments, brightness pigments, dyes and the like in ranges that do not impair the transparency, and may further contain, as suitable, extender pigments, ultraviolet absorbers, light stabilizers, antifoaming agents, thickening agents, rust-preventive agents, surface control agents and the like.

The clear coating material (Z) may be coated onto the coating film surface of the aqueous second colored coating material (Y) by a known method such as airless spraying, air spraying, rotary atomizing coating or the like, and electrostatic application may be carried out during the coating. The clear coating material (Z) may usually be applied to a cured film thickness in the range of 20 to 80 $\mu$m, preferably 25 to 60 $\mu$m and more preferably 30 to 50 $\mu$m.

After application of the clear coating material (Z), it may be left to stand at room temperature for an interval of about 1 to 60 minutes, or preheated for about 1 to 30 minutes at about 50 to 110°C, as necessary.

Step (4)

In the multilayer coating film-forming method of the invention, the uncured first colored coating film, the uncured second colored coating film and the uncured clear coating film formed in steps (1) to (3) are simultaneously heat cured.
Curing of the first colored coating film, second colored coating film and clear coating film can be carried out by common coating film baking means, such as hot air heating, infrared heating or high-frequency heating. The heating temperature is preferably 80 to 180°C, more preferably 110 to 170°C and even more preferably 130 to 160°C. The heating time is preferably 10 to 90 minutes and more preferably 15 to 60 minutes. Heating allows simultaneous curing of a multilayer coating film comprising three layers: the first colored coating film, the second colored coating film and the clear coating film.

EXAMPLES

The present invention will now be explained in greater detail using examples and comparative examples. However, it is to be understood that the invention is not limited only to these examples. The "parts" and "%" values are all based on mass.

Production of acryl-modified polyester resin (A)

Production Example 1

After charging 19.0 parts of isophthalic acid, 32.4 parts of adipic acid, 0.7 part of maleic anhydride and 45.1 parts of 1,6-hexanediol into a reactor equipped with a thermometer, thermostat, stirrer, heating apparatus and rectification column, the temperature was raised to 160°C while stirring. Next, the temperature of the contents was gradually increased from 160°C to 230°C over a period of 3.5 hours, and the condensation water that was generated was distilled off through the rectification column. After continuing the reaction at 230°C for 90 minutes, the rectification column was replaced with a water separator, approximately 4 parts of toluene was added to the contents, and the water and toluene were azeotropically distilled off to remove the condensation water. Measurement of the acid value was initiated 1 hour after addition of the toluene, terminating the heating upon confirming that the acid value had fallen below 6 and removing the toluene under reduced pressure, after which 20 parts of dipropylene glycol monomethyl ether was added for dilution, and 2.1 parts of methoxypolyethyleneglycol methacrylate (Mw 1000) was added.
It was then cooled to 130°C, and a mixture of 3 parts of styrene, 3.3 parts of acrylic acid, 6.6 parts of n-butyl acrylate and 0.75 part of t-butylperoxy-2-ethyl hexanoate was added dropwise over a period of 30 minutes. The mixture was then aged at 130°C for 30 minutes, 0.05 part of t-butylperoxy-2-ethyl hexanoate was added as an additional catalyst, and ageing was continued for 1 hour.
The obtained mixture was then cooled to 85°C and neutralized with dimethylethanolamine, deionized water was added, and the resulting mixture was dispersed in water to obtain an aqueous dispersion of acryl-modified polyester resin (A1) having a solid content of 40%. The obtained acryl-modified polyester resin (A1) had an acid value of 30 mgKOH/g, a hydroxyl value of 47 mgKOH/g and a number-average molecular weight of 3000 (number-average molecular weight of 1850 for the polyester portion).

Production Examples 2 to 17 and 19

Aqueous dispersions of acryl-modified polyester resins (A2) to (A17) and (A19) were obtained in the same manner as Production Example 1, except for changing the composition as shown in Table 1.

Production Example 18

After charging 22.3 parts of trimethylolpropane, 12.9 parts of neopentyl glycol, 19.6 parts of 2-butyl-2-ethyl-1,3-propanediol, 19.1 parts of adipic acid and 33.9 parts of isophthalic acid into a reactor equipped with a thermometer, thermostat, stirrer, reflux condenser and water separator, the temperature was raised to 160°C while stirring. Next, the temperature of the contents was gradually increased from 160°C to 230°C over a period of 3.5 hours, and the condensation water that was generated was distilled off through the rectification column. After continuing the reaction at 230°C for 90 minutes, the rectification column was replaced with a water separator, approximately 4 parts of toluene was added to the contents, and the water and toluene were azeotropically distilled off to remove the condensation water. Measurement of the acid value was initiated 1 hour after addition of the toluene, terminating the heating upon confirming that the acid value had fallen below 6, and after removing the toluene under reduced pressure, the mixture was cooled to 170°C. Next, 4.3 parts of trimellitic anhydride was added and addition reaction was conducted at 170°C for 30 minutes, after which 20 parts of dipropylene glycol monomethyl ether was added for dilution.

The obtained mixture was then cooled to 85°C and neutralized with dimethylethanolamine, deionized water was added, and the resulting mixture was dispersed in water to obtain an aqueous dispersion of polyester resin (A20) having a solid content of 40%. The obtained polyester resin (A20) had an acid value of 30 mgKOH/g, a hydroxyl value of 167 mgKOH/g and a number-average molecular weight of 1200.

Table 1 shows the characteristic values for the obtained aqueous dispersions of each acryl-modified polyester resin (A).

The aqueous dispersions of acryl-modified polyester resins (A16), (A17) and (A19) are used as comparative examples.

The aqueous dispersion of polyester resin (A18) is also used as a comparative example. Polyester resin (A18) is listed as A18 in the acryl-modified polyester resin (A) column of Table 1, for convenience.

[Table 1-1]

EP 3 572 473 B1

Table 1

| Production Example | | | | 1 | 2 | 3 | 4 | 5 | 6 | 7 | 8 | 9 | 10 |
|---|---|---|---|---|---|---|---|---|---|---|---|---|---|
| Acryl-modified polyester resin (A) | | | | A1 | A2 | A3 | A4 | A5 | A6 | A7 | A8 | A9 | A10 |
| Polyester (PE) portion | Acid component | ≥C6 | Isophthalic acid | 19.0 | 19.0 | 19.0 | 19.0 | 19.0 | 19.0 | 19.0 | 19.0 | 19.0 | 19.6 |
| | | | Adipic acid | 32.4 | 32.4 | 32.4 | 32.4 | 32.4 | 32.4 | 32.4 | 32.4 | 32.4 | 33.3 |
| | | <C6 | Succinic anhydride | | | | | | | | | | |
| | | | Maleic anhydride | 0.7 | 0.7 | 0.7 | 0.7 | 0.7 | 0.7 | 0.7 | 0.7 | 0.7 | 0.8 |
| | Alcohol component | ≥C6 | 1.6-Hexanediol | 45.1 | 45.1 | 45.1 | 45.1 | 45.1 | 45.1 | 45.1 | 45.1 | 45.1 | 23.2 |
| | | | 2-Butyl-2-ethyl-1,3-propanediol | | | | | | | | | | |
| | | | Trimethylolpropane | | | | | | | | | | |
| | | <C6 | Neopentyl glycol | | | | | | | | | | 20.7 |
| | Addition acid | Trimellitic anhydride | | | | | | | | | | | |
| | Polyester characteristic values | Number-average molecular weight | | 1850 | 1850 | 1850 | 1850 | 1850 | 1850 | 1850 | 1850 | 1850 | 1800 |
| | | Acid value (mgKOH/g) | | 5 | 5 | 5 | 5 | 5 | 5 | 5 | 5 | 5 | 5 |
| | | Hydroxyl value (mgKOH/g) | | 55 | 55 | 55 | 55 | 55 | 55 | 55 | 55 | 55 | 57 |
| | | Percentage of ≥C6 (%) | | 99.2% | 99.2% | 99.2% | 99.2% | 99.2% | 99.2% | 99.2% | 99.2% | 99.2% | 78.0% |

| | | Production Example | | 1 | 2 | 3 | 4 | 5 | 6 | 7 | 8 | 9 | 10 |
|---|---|---|---|---|---|---|---|---|---|---|---|---|---|
| Acryl (Ac) portion | Polymerizable unsaturated monomer | Aromatic ring-containin<* | Styrene | 3.0 | 3.0 | 3.0 | 3.0 | 3.0 | 3.0 | 3.0 | 3.0 | 3.0 | 3.0 |
| | | Carboxyl group-containing | Acrylic acid | 3.3 | 3.3 | 3.3 | 3.3 | 3.3 | 4.1 | 3.3 | 3.3 | 3.3 | 3.3 |
| | | OH group-containin." | Hydroxyethyl methacrylate | | | | | | | 1.5 | | | |
| | | Other | 2-Ethylhexyl acrylate | | | | | | | | | 6.6 | |
| | | | n-Butyl acrylate | 6.6 | 6.6 | 6.6 | 5.6 | 4.5 | 5.9 | 5.1 | 6.6 | 0.0 | 6.6 |
| | | Polyoxyalkylene group-containing | Methoxypolyethylene glycol methacrylate (Mw 200) | | | | | | | | | | |
| | | | Methoxypolyethylene glycol methacrylate (Mw 400) | | 2.1 | | | | | | | | |
| | | | Methoxypolyethylene glycol methacrylate (Mw 1000) | 2.1 | | | 3.2 | 4.2 | 2.1 | 2.1 | 2.1 | 2.1 | 2.1 |
| | | | Methoxypolyethylene glycol methacrylate (Mw 4000) | | | 2.1 | | | | | | | |
| | Initiator | | t-Butylperoxy-2-ethyl hexanoate | 0.75 | 0.75 | 0.75 | 0.75 | 0.75 | 0.75 | 0.75 | 1.5 | 0.8 | 0.8 |
| | Acryl characteristic values | | Acid value (mgKOH/g) | 171 | 171 | 171 | 171 | 171 | 210 | 171 | 171 | 171 | 171 |
| | | | Hydroxyl value (mgKOH/g) | 0 | 0 | 0 | 0 | 0 | 0 | 43 | 0 | 0 | 0 |
| Characteristic values | | | Number-average molecular weight | 3000 | 3000 | 3000 | 3000 | 3000 | 3000 | 3000 | 2800 | 3000 | 3000 |
| | | | Acid value (mgKOH/g) | 30 | 30 | 30 | 30 | 30 | 36 | 30 | 30 | 30 | 30 |
| | | | Hydroxyl value (mgKOH/g) | 47 | 47 | 47 | 47 | 47 | 47 | 54 | 47 | 47 | 48 |
| | | PE/Ac ratio wt | PE | 85 | 85 | 85 | 85 | 85 | 85 | 85 | 85 | 85 | 85 |
| | | | Ac | 15 | 15 | 15 | 15 | 15 | 15 | 15 | 15 | 15 | 15 |

EP 3 572 473 B1

[Table 1-2]

| Production Example | | | | 11 | 12 | 13 | 14 | 15 | 16 | 17 | 18 | 19 |
|---|---|---|---|---|---|---|---|---|---|---|---|---|
| Acryl-modified polyester resin (A) | | | | All | A12 | A13 | A14 | A15 | A16 | A17 | A18 | A19 |
| Polyester (PE) portion | Acid component | ≥C6 | Isophthalic acid | 20.2 | 16.2 | 18.9 | 19.2 | 17.9 | 19.0 | 19.0 | 33.9 | 20.5 |
| | | | Adipic acid | 34.4 | 9.5 | 32.1 | 31.6 | 30.5 | 32.4 | 32.4 | 19.1 | 16.8 |
| | | <C6 | Succinic anhydride | | 12.4 | | | | | | | 12.4 |
| | | | Maleic anhydride | 0.8 | 0.6 | 0.7 | 0.8 | 0.7 | 0.7 | 0.7 | | 0.8 |
| | Alcohol component | ≥C6 | 1,6-Hexanediol | 0.0 | | 40.3 | 45.5 | 42.4 | 45.1 | 45.1 | | |
| | | | 2-Butyl-2-ethyl-1,3-propanediol | | 52.2 | | | | | | 19.6 | |
| | | | Trimethylolpropane | | | 5.2 | | | | | 22.3 | |
| | | <C6 | Neopentyl glycol | 42.6 | | | | | | | 12.9 | 43.2 |
| | Addition acid | Trimellitic anhydride | | | | | | | | | 4.3 | |
| | Polyester characteristic values | Number-average molecular weight | | 1750 | 2000 | 1850 | 1600 | 1850 | 1850 | 1850 | 1200 | 1700 |
| | | Acid value (mgKOH/g) | | 5 | 5 | 5 | 5 | 5 | 5 | 5 | 30 | 5 |
| | | Hydroxyl value (mgKOH/g) | | 59 | 48 | 80 | 66 | 55 | 55 | 55 | 167 | 59 |
| | | Percentage of ≥C6 (%) | | 55.7% | 85.7% | 99.2% | 99.2% | 99.2% | 99.2% | 99.2% | 84.7% | 39.8% |

EP 3 572 473 B1

23

| Production Example | | | | 11 | 12 | 13 | 14 | 15 | 16 | 17 | 18 | 19 |
|---|---|---|---|---|---|---|---|---|---|---|---|---|
| Acryl (Ac) portion | Polymerizable unsaturated monomer | Aromatic ring-containing | Styrene | 3.0 | 3.0 | 3.0 | 3.0 | 4.0 | 3.0 | 3.0 | | 3.0 |
| | | Carboxyl group-containin g | Acrylic acid | 3.3 | 3.3 | 3.3 | 3.3 | 3.4 | 3.3 | 3.3 | | 3.3 |
| | | OH group-containin." | Hydroxyethyl methacrylate | | | | | | | | | |
| | | Other | 2-Ethylhexyl acrylate | | | | | | | | | |
| | | | n-Butyl acrylate | 6.6 | 6.6 | 6.6 | 6.6 | 9.8 | 6.6 | 8.7 | | 6.6 |
| | | Polyoxyalkylene group-containing | Methoxypolyethylene glycol methacrylate (Mw 200) | | | | | | 2.1 | | | |
| | | | Methoxypolyethylene glycol methacrylate (Mw 400) | | | | | | | | | |
| | | | Methoxypolyethylene glycol methacrylate (Mw 1000) | 2.1 | 2.1 | 2.1 | 2.1 | 2.8 | | 0.0 | | 2.1 |
| | | | Methoxypolyethylene glycol methacrylate (Mw 4000) | | | | | | | | | |
| | Initiator | | t-Butylperoxy-2-ethyl hexanoate | 0.8 | 0.8 | 0.8 | 0.8 | 1.0 | 0.8 | 0.8 | | 0.8 |
| | Acryl characteristic values | | Acid value (mgKOH/g) | 171 | 171 | 171 | 171 | 132 | 171 | 171 | | 171 |
| | | | Hydroxyl value (mgKOH/g) | 0 | 0 | 0 | 0 | 0 | 0 | 0 | | 0 |
| Characteristic values | | | Number-average molecular weight | 3000 | 3000 | 3000 | 3000 | 3200 | 3000 | 3000 | 1200 | 3000 |
| | | | Acid value (mgKOH/g) | 30 | 30 | 30 | 30 | 30 | 30 | 30 | 30 | 30 |
| | | | Hydroxyl value (mgKOH/g) | 50 | 41 | 68 | 56 | 44 | 47 | 47 | 167 | 50 |
| | | PE/Ac ratio wt | PE | 85 | 85 | 85 | 85 | 80 | 85 | 85 | 100 | 85 |
| | | | Ac | 15 | 15 | 15 | 15 | 20 | 15 | 15 | 0 | 15 |

Production of hydroxyl group-containing acrylic resin (D1)

Production Example 20

After charging 30 parts of propylene glycol monopropyl ether into a reactor equipped with a thermometer, thermostat, stirrer, reflux condenser, nitrogen inlet tube and dropper, and raising the temperature to 85°C, a mixture of 6 parts of styrene, 30 parts of methyl methacrylate, 25 parts of n-butyl acrylate, 20 parts of 2-ethylhexyl acrylate, 13 parts of 4-hydroxybutyl acrylate, 6 parts of acrylic acid, 10 parts of propylene glycol monopropyl ether and 2 parts of 2,2'-azobis(2,4-dimethylvaleronitrile) was added dropwise into a flask over a period of 4 hours, and upon completion of the dropwise addition the mixture was aged for 1 hour. A mixture of 5 parts of propylene glycol monopropyl ether and 1 part of 2,2'-azobis(2,4-dimethylvaleronitrile) was then further added dropwise into a flask over a period of 1 hour, and upon completion of the dropwise addition the mixture was aged for 1 hour. There was further added 7.4 parts of 2-(dimethylamino)ethanol for neutralization, and deionized water was slowly added thereto to obtain a solution of a hydroxyl group-containing acrylic resin (D1) with a solid concentration of 40%. The acid value of the obtained hydroxyl group-containing acrylic resin was 47 mgKOH/g, the hydroxyl value was 51 mgKOH/g, and the weight-average molecular weight was 50,000.

Production of aqueous coating composition (aqueous first colored coating material)

Example 1

After mixing 50 parts of the acryl-modified polyester resin (A1) solution obtained in Production Example 1 (solid resin content: 20 parts), 80 parts of "JR-806" (trade name of Tayca Corp., rutile titanium dioxide), 1 part of "CARBON MA-100" (trade name of Mitsubishi Chemical Corp., carbon black), 15 parts of "BARIACE B-35" (trade name of Sakai Chemical Industry Co., Ltd., barium sulfate powder, mean primary particle size: 0.5 $\mu$m), 5 parts of "MICRO ACE S-3" (trade name of Nippon Talc Co., Ltd., talc powder, mean primary particle size: 4.8 $\mu$m) and 20 parts of deionized water, and adjusting the mixture to pH 8.5 with 2-(dimethylamino)ethanol, it was dispersed for 30 minutes with a paint shaker to obtain a pigment-dispersed paste.

Next, 171 parts of the obtained pigment-dispersed paste, 62 parts of the acryl-modified polyester resin (A1) solution obtained in Production Example 1 (25 parts solid resin content), 12.5 parts of the hydroxyl group-containing acrylic resin (D1) solution obtained in Production Example 20 (5 parts solid resin content), 25 parts of a polyurethane resin (D2) ("UCOAT UX-485", product of Sanyo Chemical Industries, Ltd., polycarbonate-based, solid content: 40%) (10 parts solid resin content), 38 parts of a melamine resin (B1) (methyl-butyl mixed etherified melamine resin, solid content: 80%, weight-average molecular weight: 800) (30 parts solid resin content), 10 parts of a blocked polyisocyanate (B2) ("DESMODUR BL3575", trade name of Bayer Material Science, pyrazole blocked polyisocyanate) (10 parts solid resin content) and 2 parts of an epoxy phosphoric acid ester compound (C1) were mixed to uniformity.

To the obtained mixture there was then added "UH-752" (trade name of ADEKA Corp., urethane associative thickening agent), 2-(dimethylamino)ethanol and deionized water, to obtain an aqueous first colored coating material No.1 with pH 8.5, a solid concentration of 50%, and a viscosity of 3000 mPa·s as measured under conditions of 6 rpm with a Brookfield viscometer at 20°C.

The epoxy phosphoric acid ester compounds (C1) to (C3) used were as follows.

Epoxy phosphoric acid ester compound (C1): DER621-PP50: trade name of The Dow Chemical Company, epoxy phosphoric acid ester compound, acid value: 45 mgKOH/g, solid content: 50.0%

Epoxy phosphoric acid ester compound (C2): DER621-EB50: trade name of The Dow Chemical Company, epoxy phosphoric acid ester compound, acid value: 35 mgKOH/g, solid content: 50.0%

Epoxy phosphoric acid ester compound (C3): XU-7189.00: trade name of The Dow Chemical Company, epoxy phosphoric acid ester compound, acid value: 9.8 mgKOH/g, solid content: 50.0%

Examples 2 to 20 and Comparative Examples 1 to 6

Aqueous first colored coating materials No. 2 to 26, having pH 8.5, a solid concentration of 50 mass%, and a viscosity of 3000 mPa·s as measured with a Brookfield viscometer under conditions of 6 rpm, 20°C, were obtained in the same manner as Example 1, except that the acryl-modified polyester resins and their compositions in Example 1 were changed as shown in Table 2.

Aqueous first colored coating materials No. 21 to 26 are comparative examples, and Table 2 shows their solid contents.

[Table 2-1]

Table 2

| | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Aqueous first colored coating material No. | | | 1 | 2 | 3 | 4 | 5 | 6 | 7 | 8 | 9 | 10 | 11 | 12 |
| paste dispersion Pigment | Acryl-modified polyester resin (A) | Type | A1 | A1 | A1 | A2 | A3 | A4 | A5 | A6 | A7 | A8 | A9 | A10 |
| | | Amount | 20 | 20 | 20 | 20 | 20 | 20 | 20 | 20 | 20 | 20 | 20 | 20 |
| | Pigment | JR-806 | 80 | 80 | 80 | 80 | 80 | 80 | 80 | 80 | 80 | 80 | 80 | 80 |
| | | CARBON MA-100 | 1 | 1 | 1 | 1 | 1 | 1 | 1 | 1 | 1 | 1 | 1 | 1 |
| | | BARIACE B-35 | 15 | 15 | 15 | 15 | 15 | 15 | 15 | 15 | 15 | 15 | 15 | 15 |
| | | MICRO ACE S-3 | 5 | 5 | 5 | 5 | 5 | 5 | 5 | 5 | 5 | 5 | 5 | 5 |
| Acryl-modified polyester resin (A) | | | 25 | 25 | 25 | 25 | 25 | 25 | 25 | 25 | 25 | 25 | 25 | 25 |
| Reactive group-containing resin (D) | Hydroxyl-containing acrylic resin (D1) | | 5 | 5 | 5 | 5 | 5 | 5 | 5 | 5 | 5 | 5 | 5 | 5 |
| | Polyurethane resin (D2) | | 10 | 10 | 10 | 10 | 10 | 10 | 10 | 10 | 10 | 10 | 10 | 10 |
| Crosslinking agent (B) | Melamine resin (B1) | | 30 | 30 | 30 | 30 | 30 | 30 | 30 | 30 | 30 | 30 | 30 | 30 |
| | Blocked polyisocyanate (B2) | | 10 | 10 | 10 | 10 | 10 | 10 | 10 | 10 | 10 | 10 | 10 | 10 |
| Epoxyphosphoric acid ester (C) | Epoxy phosphoric acid (C1) | | 2 | | | 2 | 2 | 2 | 2 | 2 | 2 | 2 | 2 | 2 |
| | Epoxy phosphoric acid (C2) | | | 2 | | | | | | | | | | |
| | Epoxy phosphoric acid (C3) | | | | 2 | | | | | | | | | |
| Storage stability | ΔB6 Thickening rate | | 10 | 11 | 12 | 10 | 13 | 13 | 12 | 15 | 13 | 16 | 13 | 14 |

Table 2 (cont.)

| | | | Example | | | | | | | | Comp. Example | | | | | |
|---|---|---|---|---|---|---|---|---|---|---|---|---|---|---|---|---|
| | | | 13 | 14 | 15 | 16 | 17 | 18 | 19 | 20 | 1 | 2 | 3 | 4 | 5 | 6 |
| Aqueous first colored coating material No. | | | 13 | 14 | 15 | 16 | 17 | 18 | 19 | 20 | 21 | 22 | 23 | 24 | 25 | 26 |
| paste dispersion Pigment | Acryl-modified polyester resin (A) | Type | A11 | A12 | A13 | A14 | A15 | A1 | A1 | A1 | A16 | A17 | A18 | A19 | A1 | A1 |
| | | Amount | 20 | 20 | 20 | 20 | 20 | 20 | 20 | 20 | 20 | 20 | 20 | 20 | 20 | 20 |
| | Pigment | JR-806 | 80 | 80 | 80 | 80 | 80 | 80 | 80 | 80 | 80 | 80 | 80 | 80 | 80 | 80 |
| | | CARBON MA-100 | 1 | 1 | 1 | 1 | 1 | 1 | 1 | 1 | 1 | 1 | 1 | 1 | 1 | 1 |
| | | BARIACE B-35 | 15 | 15 | 15 | 15 | 15 | 15 | 15 | 15 | 15 | 15 | 15 | 15 | 15 | 15 |
| | | MICRO ACE S-3 | 5 | 5 | 5 | 5 | 5 | 5 | 5 | 5 | 5 | 5 | 5 | 5 | 5 | 5 |
| Acryl-modified polyester resin (A) | | | 25 | 25 | 25 | 25 | 25 | 25 | 25 | 20 | 25 | 25 | 25 | 25 | 25 | 25 |
| Reactive group-containing resin (D) | Hydroxyl-containing acrylic resin (D1) | | 5 | 5 | 5 | 5 | 5 | 5 | 5 | 15 | 5 | 5 | 5 | 5 | 5 | 5 |
| | Polyurethane resin (D2) | | 10 | 10 | 10 | 10 | 10 | 10 | 10 | 10 | 10 | 10 | 10 | 10 | 10 | 10 |
| Crosslinking agent (B) | Melamine resin (B1) | | 30 | 30 | 30 | 30 | 30 | 35 | 25 | 25 | 30 | 30 | 30 | 30 | 30 | 30 |
| | Blocked polyisocyanate (B2) | | 10 | 10 | 10 | 10 | 10 | 5 | 15 | 10 | 10 | 10 | 10 | 10 | 10 | 10 |
| Epoxyphosphoric acid ester (C) | Epoxy phosphoric acid (C1) | | 2 | 2 | 2 | 2 | 2 | 2 | 2 | 2 | 2 | 2 | 2 | 2 | 0 | 15 |
| | Epoxy phosphoric acid (C2) | | | | | | | | | | | | | | | |
| | Epoxy phosphoric acid (C3) | | | | | | | | | | | | | | | |
| Storage stability | ΔB6 Thickening rate | | 20 | 18 | 18 | 13 | 14 | 16 | 15 | 18 | 50 | 65 | 24 | 20 | 14 | 60 |

Examples 21 to 40 and Comparative Examples 7 to 12

The aqueous first colored coating materials No. 1 to 26 obtained in Examples 1 to 20 and Comparative Examples 1 to 6 were subjected to the following evaluation test. The evaluation results are shown in Table 3.

Storage stability: The rate of change in the viscosity from the initial viscosity, at 6 rpm with a Brookfield viscometer, was evaluated after storage for 30 days at 30°C. A viscosity increase or decrease of within 50% is considered to be a practical level.

$$\Delta B6 \ (\%) = 100 \times (\text{viscosity after storage - initial viscosity})/\text{initial viscosity}$$

A test sheet was prepared in the manner described below, and the finished appearance (sharpness), chipping resistance and waterproof adhesiveness were evaluated.

(Fabrication of articles to be coated for testing)

A cold-rolled steel sheet that had been subjected to zinc phosphate chemical conversion treatment was electrodeposited with ELECRON GT-10 (trade name of Kansai Paint Co., Ltd., cationic electrodeposition coating) to a dry film thickness of 20 μm, and was heated at 170°C for 30 minutes for curing to produce articles to be coated for testing.

(Fabrication of test coated sheets)

The articles to be coated for testing were electrostatically coated with each aqueous first colored coating material using a rotary atomizing electrostatic coater, to a cured film thickness of 40 μm, and after being allowed to stand for 5 minutes, and then being preheated at 80°C for 3 minutes, the first colored coating film was electrostatically coated with "WBC-713T No.1F7" (trade name of Kansai Paint Co., Ltd., acrylmelamine resin-based aqueous base coat material, silver coat color) as the aqueous second colored coating material using a rotary atomizing electrostatic coater, to a cured film thickness of 15 μm, to form the second colored coating film. After standing for 3 minutes, it was preheated at 80°C for 3 minutes, and then the uncured second colored coating film was electrostatically coated with "MAGICRON KINO-1210" (trade name of Kansai Paint Co., Ltd., acrylic resin-based solvent-type overcoat clear coating material) to a cured film thickness of 35 μm, to form a clear coating film. After standing for 7 minutes, it was heated at 140°C for 30 minutes to cure the first colored coating film, second colored coating film and clear coating film, to prepare each test coated sheet.

Sharpness: Each test coated sheet was evaluated using the LW value and SW value measured with a Wave Scan DOI (trade name of BYK Gardner). The LW value is an index of the amplitude of surface roughness with a wavelength of about 1.2 to 20 mm, with a smaller measured value representing higher smoothness of the coating surface. The SW value is an index of the amplitude of surface roughness with a wavelength of about 0.16 to 1.2 mm, with a smaller measured value representing higher richness, luster and glossy feel of the coating surface. A practical level was defined as an LW value of 15 or lower and an SW value of 20 or lower.

Chipping resistance: Each test coated sheet was set on the sample holding stage of a Model JA-400 chipping tester by Suga Test Instruments Co., Ltd., and 100 g of crushed granite of #6 grain size was impacted onto the test sheet at an angle of 45°, using compressed air at 0.392 MPa (4 kgf/cm$^2$) from a distance of 30 cm, at -20°C. The obtained test coated sheet was then washed with water and dried, and cloth adhesive tape (product of Nichiban Co., Ltd.) was attached to the coated surface and peeled off, after which the extent of damage in the coating film was visually examined and evaluated by the following standard, defining a practical level as "G" or better.

VG: Very small damage size, no exposure of electrodeposition surface or base steel sheet.
G: Small damage size, no exposure of electrodeposition surface or base steel sheet.
F: Small damage size, but some exposure of electrodeposition surface or base steel sheet.
P: Considerable damage size, with exposure of base steel sheet.

Waterproof adhesiveness: Each test sheet was immersed for 240 hours in warm water at 40°C and then raised and dried at 20°C for 12 hours, after which the multilayer coating film on the test sheet was notched with a cutter in a lattice-like manner reaching to the basis material, to create a grid of 100 squares with sizes of 2 mm × 2 mm. Adhesive cellophane tape was then attached to the surface and the tape was abruptly peeled off at 20°C, after which the number of squares of the coating film peeled off from the square grid coating film was examined.

[Table 3-1]

Table 3

| | | | Example | | | | | | | | | | | |
| --- | --- | --- | --- | --- | --- | --- | --- | --- | --- | --- | --- | --- | --- | --- |
| | | | 21 | 22 | 23 | 24 | 25 | 26 | 27 | 28 | 29 | 30 | 31 | 32 |
| Aqueous first colored coating material No. | | | 1 | 2 | 3 | 4 | 5 | 6 | 7 | 8 | 9 | 10 | 11 | 12 |
| Sharpness | LW | | 12 | 13 | 12 | 13 | 12 | 13 | 13 | 14 | 13 | 13 | 13 | 14 |
| | SW | | 11 | 11 | 12 | 11 | 10 | 11 | 12 | 11 | 13 | 12 | 14 | 12 |
| Chipping resistance | | | VG | VG | VG | VG | VG | VG | VG | VG | VG | VG | G | G |

(continued)

| | Example | | | | | | | | | | | |
|---|---|---|---|---|---|---|---|---|---|---|---|---|
| | 21 | 22 | 23 | 24 | 25 | 26 | 27 | 28 | 29 | 30 | 31 | 32 |
| Waterproof adhesiveness | 0 | 0 | 0 | 0 | 0 | 0 | 0 | 0 | 0 | 0 | 0 | 0 |

[Table 3-2]

| Table 3 (cont.) | | | | | | | | | | | | | | |
|---|---|---|---|---|---|---|---|---|---|---|---|---|---|---|
| | | Example | | | | | | | | Comp. Example | | | | |
| | | 33 | 34 | 35 | 36 | 37 | 38 | 39 | 40 | 7 | 8 | 9 | 10 | 11 | 12 |
| Aqueous first colored coating material No. | | 13 | 14 | 15 | 16 | 17 | 18 | 19 | 20 | 21 | 22 | 23 | 24 | 25 | 26 |
| Sharpness | LW | 13 | 14 | 13 | 13 | 14 | 14 | 14 | 15 | 16 | 16 | 12 | 13 | 14 | 14 |
| | SW | 12 | 13 | 12 | 12 | 13 | 15 | 10 | 15 | 18 | 20 | 23 | 17 | 15 | 13 |
| Chipping resistance | | G | G | VG | VG | VG | VG | VG | G | G | G | P | F | G | F |
| Waterproof adhesiveness | | 0 | 0 | 0 | 0 | 0 | 0 | 0 | 0 | 0 | 0 | 5 | 0 | 2 | 0 |

**Claims**

1. An aqueous coating composition comprising:

   (A) an acryl-modified polyester resin having an acrylic portion and a polyester portion,
   (B) a crosslinking agent, and
   (C) an epoxy phosphoric acid ester compound,

   wherein

   the acryl-modified polyester resin (A) comprises a polyoxyalkylene group-containing unsaturated monomer with a weight-average molecular weight of 400 or greater as a monomer component composing the acrylic portion, the content of the polyoxyalkylene group-containing monomer with a weight-average molecular weight of 400 or greater is in the range of 1 to 5 mass% with respect to the acryl-modified polyester resin (A), the proportion of compounds of 6 or more carbon atoms among the components composing the polyester portion is 50 mass% or greater with respect to the total amount of the components composing the polyester portion, and the content of the epoxy phosphoric acid ester compound (C) is 0.1 to 10 parts by mass with respect to 100 parts by mass as the total solid content of (A) and (B), wherein the weight-average molecular weight is determined by gel permeation chromatography.

2. The aqueous coating composition according to claim 1, wherein the compound of 6 or more carbon atoms among the components composing the polyester portion is a compound having an alkylene group of 4 or more carbon atoms.

3. The aqueous coating composition according to claim 1 or 2, wherein the ratio of the acrylic portion and the polyester portion of the acryl-modified polyester resin (A) is 5 to 40 mass% for the acrylic portion and 60 to 95 mass% for the polyester portion, with respect to the acryl-modified polyester resin (A) (the total amount of the acrylic portion and the polyester portion).

4. The aqueous coating composition according to any one of claims 1 to 3, wherein the epoxy phosphoric acid ester compound (C) is one having a hydroxyl group and a phosphoric acid residue in the molecule.

5. An article having a coating film of an aqueous coating composition according to any one of claims 1 to 4.

**6.** A multilayer coating film-forming method in which the following steps (1) to (4) are carried out in order, on an article to be coated:

> step (1): a step of applying an aqueous first colored coating material (X) to form a first colored coating film,
> step (2): a step of applying an aqueous second colored coating material (Y) onto the first colored coating film formed in step (1) to form a second colored coating film,
> step (3): a step of applying a clear coating material (Z) onto the second colored coating film formed in step (2) to form a clear coating film, and
> step (4): a step of heat curing the first colored coating film, second colored coating film and clear coating film formed in steps (1) to (3) all at once,

> wherein the aqueous first colored coating material (X) is an aqueous coating composition according to any one of claims 1 to 4.

**7.** The multilayer coating film-forming method according to claim 6, wherein the clear coating material (Z) is one comprising a carboxyl group-containing resin and a polyepoxide, or a hydroxyl group-containing resin and a polyisocyanate compound.


**Patentansprüche**

**1.** Wässrige Beschichtungszusammensetzung, die Folgendes umfasst:

> (A) ein acrylmodifiziertes Polyesterharz, das einen Acrylanteil und einen Polyesteranteil aufweist,
> (B) ein Vernetzungsmittel und
> (C) eine Epoxyphosphorsäureesterverbindung,

> wobei

> das acrylmodifizierte Polyesterharz (A) ein Polyoxyalkylengruppen-enthaltendes ungesättigtes Monomer mit einem Massenmittel von 400 oder mehr als eine Monomerkomponente umfasst, die den Acrylanteil bildet,
> der Gehalt des Polyoxyalkylengruppen-enthaltenden Monomers mit einem Massenmittel von 400 oder mehr in dem Bereich von 1 bis 5 Masse-% hinsichtlich des acrylmodifizierten Polyesterharz (A) liegt,
> das Verbindungsverhältnis von 6 oder mehr Kohlenstoffatomen unter den Komponenten, die den Polyesteranteil bilden, 50 Masse-% oder mehr hinsichtlich der Gesamtmenge der Komponenten beträgt, die den Polyesteranteil bilden, und
> der Gehalt der Epoxyphosphorsäureesterverbindung (C) 0,1 bis 10 Masseteile hinsichtlich 100 Masseteile als der Gesamtfeststoffgehalt von (A) und (B) beträgt,
> wobei das Massenmittel durch Gelpermeationschromatographie bestimmt wird.

**2.** Wässrige Beschichtungszusammensetzung nach Anspruch 1, wobei die Verbindung von 6 oder mehr Kohlenstoffatomen unter den Komponenten, die den Polyesteranteil bilden, eine Verbindung ist, die eine Alkylengruppe von 4 oder mehr Kohlenstoffatomen aufweist.

**3.** Wässrige Beschichtungszusammensetzung nach Anspruch 1 oder 2, wobei das Verhältnis des Acrylanteils und des Polyesteranteils des acrylmodifizierten Polyesterharzes (A) 5 bis 40 Masse-% für den Acrylanteil und 60 bis 95 Masse-% für den Polyesteranteil hinsichtlich des acrylmodifizierten Polyesterharzes (A) (die Gesamtmenge des Acrylanteils und des Polyesteranteils) beträgt.

**4.** Wässrige Beschichtungszusammensetzung nach einem der Ansprüche 1 bis 3, wobei die Epoxyphosphorsäureesterverbindung (C) eine ist, die eine Hydroxylgruppe und einen Phosphorsäurerest in dem Molekül aufweist.

**5.** Erzeugnis, das einen Beschichtungsfilm aus einer wässrigen Beschichtungszusammensetzung nach einem der Ansprüche 1 bis 4 aufweist.

**6.** Ausbildungsverfahren eines mehrschichtigen Beschichtungsfilms, in dem die folgenden Schritte (1) bis (4) der Reihe nach auf einem Erzeugnis durchgeführt werden, der beschichtet werden soll:

Schritt (1): einen Schritt eines Aufbringens eines wässrigen ersten gefärbten Beschichtungsmaterials (X), um einen ersten gefärbten Beschichtungsfilm auszubilden,

Schritt (2): einen Schritt des Aufbringens eines wässrigen zweiten gefärbten Beschichtungsmaterials (Y) auf den ersten gefärbten Beschichtungsfilm hinauf, der in Schritt (1) ausgebildet wird, um einen zweiten gefärbten Beschichtungsfilm auszubilden,

Schritt (3): einen Schritt des Aufbringens eines klaren Beschichtungsmaterials (Z) auf den zweiten gefärbten Beschichtungsfilm hinauf, der in Schritt (2) ausgebildet wird, um einen klaren Beschichtungsfilm auszubilden, und

Schritt (4): einen Schritt eines gleichzeitigen Wärmehärtens des ersten gefärbten Beschichtungsfilms, des zweiten gefärbten Beschichtungsfilms und des klaren Beschichtungsfilms, die in den Schritten (1) bis (3) ausgebildet werden, wobei das wässrige erste gefärbte Beschichtungsmaterial (X) eine wässrige Beschichtungszusammensetzung nach einem der Ansprüche 1 bis 4 ist.

7. Ausbildungsverfahren des mehrschichtigen Beschichtungsfilms nach Anspruch 6, wobei das klare Beschichtungsmaterial (Z) eines ist, das ein Carboxylgruppenenthaltendes Harz und ein Polyepoxid oder ein Hydroxylgruppen-enthaltendes Harz und eine Polyisocyanatverbindung umfasst.

**Revendications**

1. Composition de revêtement aqueuse comprenant :

(A) une résine de polyester modifiée par un acrylique ayant une partie acrylique et une partie polyester,
(B) un agent de réticulation, et
(C) un composé ester d'acide phosphorique époxy,
la résine de polyester modifiée par un acrylique (A) comprenant un monomère insaturé contenant un groupe polyoxyalkylène avec un poids moléculaire moyen en poids égal ou supérieur à 400 en tant que composant monomère composant la partie acrylique,
la teneur en monomère contenant un groupe polyoxyalkylène ayant un poids moléculaire moyen en poids égal ou supérieur à 400 étant dans la plage de 1 à 5 % en masse par rapport à la résine de polyester modifiée par un acrylique (A),
la proportion de composés d'au moins 6 atomes de carbone parmi les composants composant la partie polyester étant égale ou supérieure à 50 % en masse par rapport à la quantité totale des composants composant la partie polyester, et
la teneur en composé d'ester d'acide phosphorique époxy (C) étant de 0,1 à 10 parties en masse par rapport à 100 parties en masse de la teneur totale en solides de (A) et (B),
le poids moléculaire moyen en poids étant déterminé par chromatographie par perméation de gel.

2. Composition de revêtement aqueuse selon la revendication 1, le composé d'au moins 6 atomes de carbone parmi les composants composant la partie polyester étant un composé ayant un groupe alkylène d'au moins 4 atomes de carbone.

3. Composition de revêtement aqueuse selon la revendication 1 ou 2, le rapport de la partie acrylique et de la partie polyester de la résine de polyester modifiée par un acrylique (A) étant de 5 à 40 % en masse pour la partie acrylique et de 60 à 95 % en masse pour la partie polyester, par rapport à la résine de polyester modifiée par un acrylique (A) (la quantité totale de la partie acrylique et de la partie polyester).

4. Composition de revêtement aqueuse selon l'une quelconque des revendications 1 à 3, le composé d'ester d'acide phosphorique époxy (C) étant un composé ayant un groupe hydroxyle et un résidu d'acide phosphorique dans la molécule.

5. Article ayant un film de revêtement d'une composition de revêtement aqueuse selon l'une quelconque des revendications 1 à 4.

6. Procédé de formation de film de revêtement multicouche dans lequel les étapes (1) à (4) suivantes sont réalisées dans l'ordre, sur un article à revêtir :

étape (1) : une étape d'application d'un premier matériau de revêtement coloré aqueux (X) pour former un premier film de revêtement coloré,

étape (2) : une étape d'application d'un second matériau de revêtement coloré aqueux (Y) sur le premier film de revêtement coloré formé à l'étape (1) pour former un second film de revêtement coloré,

étape (3) : une étape d'application d'un matériau de revêtement transparent (Z) sur le second film de revêtement coloré formé à l'étape (2) pour former un film de revêtement transparent, et

étape (4) : une étape de durcissement à la chaleur du premier film de revêtement coloré, du second film de revêtement coloré et du film de revêtement transparent formés aux étapes (1) à (3) en une seule fois,

le premier matériau de revêtement coloré aqueux (X) étant une composition aqueuse de revêtement selon l'une quelconque des revendications 1 à 4.

7. Procédé de formation de film de revêtement multicouche selon la revendication 6, le matériau de revêtement transparent (Z) étant un matériau comprenant une résine contenant un groupe carboxyle et un polyépoxyde, ou une résine contenant un groupe hydroxyle et un composé polyisocyanate.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007126107 A
- JP 2004043524 A
- JP 2008144063 A
- EP 1877497 A
- JP 52022878 B
- JP H08151358 A